# EUROPEAN PATENT APPLICATION

(11) **EP 4 641 592 A1**
(43) Date of publication of application: **29.10.2025**
(21) Application number: 25169202.6
(22) Date of filing: 08.04.2025
(51) Int. Cl.: H01B 13/012, H01R 43/28, B65H 49/38, B65H 75/28, B65G 47/61, H02G 3/04

(54) **WIRE ASSEMBLY SYSTEMS AND METHODS FOR ASSEMBLING ELECTRICAL RACEWAY MODULES**

(30) Priority: 12.04.2024 US 202418634337
(71) Applicant: The Boeing Company, Arlington, VA 22202 (US)
(72) Inventor: BLACKEN, LARS E., Arlington, 22202 (US); MITCHELL, BRADLEY J., Arlington, 22202 (US); MOHLMAN, SHAWN D., Arlington, 22202 (US); MCCASKEY, JEFFREY A., Arlington, 22202 (US); BARLETTA, ALDO M., Arlington, 22202 (US); ROGERS, RYAN P., Arlington, 22202 (US)
(74) Representative: Lissandrini, Marco

(57) **Abstract**

A wire assembly system for assembling an electrical raceway module includes a raceway assembly fixture, a wire shuttle subsystem, at least one robotic manipulator and a system controller. A method for assembling an electrical raceway module includes receiving the raceway assembly fixture from a raceway preparation area on a workpiece support structure and receiving a wire for placement in the raceway assembly fixture from a wire preparation system. The wire is positioned on an upper surface of the tool support structure between a shuttle holding a first terminated end and another shuttle holding the other terminated end. The wire is picked from the upper surface of the tool support structure, the first shuttle and the second shuttle and placed at a predetermined location in the raceway assembly fixture. The process can be repeated for additional wires until the electrical raceway module is assembled.

## Description

### FIELD

The present disclosure relates generally to wire assembly systems for assembling electrical raceway modules and, particularly, to techniques for assembling electrical raceway modules. The various techniques control one or more robotic manipulator and a wire shuttle subsystem to assemble an electrical raceway module in a raceway assembly fixture.

### BACKGROUND

Commercial practices for wire harness manufacturing have not changed substantially since the 1960s. With regard to raceway wiring, individual wires are prepared, terminated into first-end connectors, formed into individual harnesses, terminated into second-end connectors and assembled as bundles onto raceway supports. The raceway supports are transported to the factory and installed in an end item, such as an airplane. This process currently may take 45 person-days. Moreover, the current process includes many non-value-added steps related to packaging, shipping, receiving and un-packaging. The process may also result in a significant amount of work-in-process buffers due to scarce resources and/or long lead items.

Electrical wiring raceways include a large number of electrical wires running down the length of an end item to distribute data, signals and power throughout the end item. For example, airplanes typically have four or five raceways running the length of the airplane. The raceways are physically separated from each other to mitigate against physical threats, such as engine blade out or bomb blast.

A raceway is traditionally assembled using the following process. Long wire bundles are assembled, tested, coiled, packaged and shipped to an electrical system responsibility center. Third parties may assemble these wire bundles. The electrical system responsibility center receives the bundles, uncoils them and assembles them together with other similar bundles on long assembly tables. The bundles are tied and/or clamped together and attached to spanner bar substructures. These long assemblies are then coiled onto transport tools and transported to the end item assembly factory. At the end item assembly factory, the assemblies are uncoiled, carried into the end item, lifted and installed. End items, such as airplanes, may use an exceptionally large transport tool to avoid the coiling, uncoiling and lifting tasks. Traditional raceway assemblies are based on end item production lines.

Existing raceways, wiring harnesses and bundles may include wires that range from about 60,96 cm (i.e., 24 inches) to 30,48 m (i.e., 100 feet). Current techniques for assembling such wires in a raceway require a substantial amount of manual manipulation. For example, there are no known solutions for autonomously managing wire length variability.

Accordingly, those skilled in the art continue with research and development efforts to improve techniques for autonomous preparation of wire and autonomous transport of wire prepared autonomously and/or with manual manipulation.

### SUMMARY

Disclosed are examples of wire assembly systems and methods for assembling electrical raceway modules. The following is a non-exhaustive list of examples, which may or may not be claimed, of the subject matter according to the present disclosure.

In an example, a wire assembly system for assembling an electrical raceway module includes a raceway assembly fixture, a wire shuttle subsystem, at least one robotic manipulator and a system controller. The raceway assembly fixture is disposed on a top surface of a workpiece support structure. The wire shuttle subsystem includes a first shuttle disposed on an upper surface of a tool support structure and a second shuttle disposed on the upper surface. The at least one robotic manipulator is disposed on the upper surface of the tool support structure. The system controller is in operative communication with the wire shuttle subsystem and the at least one robotic manipulator to control placement of a wire from the first shuttle and the second shuttle to the raceway assembly fixture.

In an example, a method for assembling an electrical raceway module includes: (1) receiving a raceway assembly fixture from a raceway preparation area on a workpiece support structure, the workpiece support structure alongside a tool support structure; (2) receiving a wire for placement in the raceway assembly fixture from a wire preparation system, the wire including a first terminated end and a second terminated end; (3) positioning the wire on an upper surface of the tool support structure between a first shuttle holding the first terminated end and a second shuttle holding the second terminated end; (4) picking the wire with the first terminated end and the second terminated end from the upper surface of the tool support structure, the first shuttle and the second shuttle; and (5) placing the wire at a predetermined location in the raceway assembly fixture.

In another example, a method for assembling an electrical raceway module includes: (1) receiving a raceway assembly fixture from a raceway preparation area on a workpiece support structure, the workpiece support structure alongside a tool support structure; (2) receiving a wire for placement in the raceway assembly fixture from a wire preparation system, the wire including a first terminated end and a second terminated end; (3) positioning the wire on an upper surface of the tool support structure between a first shuttle holding the first terminated end and a second shuttle holding the second terminated end; (4) picking the wire with the first terminated end and the second terminated end from the upper surface of the tool support structure, the first shuttle and the second shuttle; (5) placing the wire at a predetermined location in the raceway assembly fixture; (6) repeating the receiving, the positioning, the picking and the placing of the wire for a next wire until all wires designated for autonomous placement in the raceway assembly fixture are placed; and (7) transferring the raceway assembly fixture to a post wire assembly area for manual assembly processes on the raceway assembly fixture to prepare the electrical raceway module for installation in an end item.

Other examples of the disclosed wire assembly systems and methods for assembling electrical raceway modules will become apparent from the following detailed description, the accompanying drawings and the appended claims.

### BRIEF DESCRIPTION OF THE DRAWINGS

Fig. 1 is a functional block diagram of an example of a fabrication system for assembling wires, raceway assembly fixtures and electrical raceway modules;
Fig. 2 is a functional block diagram of an example of a wire assembly system for assembling electrical raceway modules;
Fig. 3 is a front view of an example of a wire;
Fig. 4 is a front perspective view of an example of a wire carrier for transporting the wire of Fig. 3;
Fig. 5 is a top functional view of an example of a raceway assembly fixture of the wire assembly system of Fig. 2;
Fig. 6 is a top functional diagram of another example of a wire assembly system for assembling electrical raceway modules;
Fig. 7 is a functional block diagram of the system controller for the wire assembly system of Fig. 6;
Fig. 8A is a top functional diagram showing a portion of the wire assembly system of Fig. 6;
Fig. 8B is a top functional diagram showing another portion of the wire assembly system of Fig. 6;
Fig. 9 is a perspective view showing an example of a portion of the wire shuttle subsystem in the wire assembly system of Fig. 6;
Fig. 10 is a perspective view showing an example of an insertion robotic manipulator in the wire assembly system of Fig. 6;
Fig. 11 is a perspective view showing an example of a transfer robotic manipulator in the wire assembly system of Fig. 6;
Fig. 12 is a perspective view showing an example of a tending robotic manipulator in the wire assembly system of Fig. 6;
Fig. 13 is a perspective view showing another example of an insertion robotic manipulator in the wire assembly system of Fig. 6;
Fig. 14 is a flow diagram of an example of a method for assembling an electrical raceway module;
Fig. 15, in combination with Fig. 14, is a flow diagram of another example of a method for assembling an electrical raceway module;
Fig. 16 is a flow diagram of an example of the receiving of the raceway assembly fixture in the method of Fig. 14;
Fig. 17 is a flow diagram of another example of the receiving of the raceway assembly fixture in the method of Fig. 14;
Fig. 18 is a flow diagram of an example of the receiving of the wire in the method of Fig. 14;
Fig. 19 is a flow diagram of an example of the picking of the coil of the wire of Fig. 18;
Fig. 20 is a flow diagram of an example of the placing of the coil, the first terminated end and the second terminated end of Fig. 18;
Fig. 21 is a front perspective view of an example of an end effector for the tending robotic manipulator of Fig. 12;
Fig. 22 is a flow diagram of an example of the positioning of the wire in the method of Fig. 14;
Fig. 23 is a flow diagram of an example of the moving of the first shuttle of Fig. 22;
Fig. 24 is a flow diagram of an example of the moving of the second shuttle of Fig. 22;
Fig. 25 is a flow diagram of an example of the picking of the wire in the method of Fig. 14;
Fig. 26 is a flow diagram of an example of the placing of the wire in the method of Fig. 14;
Fig. 27 is a flow diagram of another example of the picking and the placing of the wire in the method of Fig. 14;
Fig. 28, in combination with Fig. 27, is a flow diagram of yet another example of the picking and the placing of the wire in the method of Fig. 14;
Fig. 29, in combination with Figs. 27 and 28, is a flow diagram of still another example of the picking and the placing of the wire in the method of Fig. 14;
Fig. 30 is a flow diagram of another example of a method for assembling an electrical raceway module;
Fig. 31 is a flow diagram of an example of the receiving of the raceway assembly fixture in the method of Fig. 30;
Fig. 32 is a flow diagram of an example of the receiving of the wire in the method of Fig. 30;
Fig. 33 is a flow diagram of an example of the positioning of the wire in the method of Fig. 30;
Fig. 34 is a flow diagram of an example of the picking of the wire in the method of Fig. 30;
Fig. 35 is a flow diagram of an example of the placing of the wire in the method of Fig. 30;
Fig. 36 is a flow diagram of another example of the picking and the placing of the wire in the method of Fig. 30;
Fig. 37 is a block diagram of aircraft production and service methodology that implements one or more of the examples of methods for assembling an electrical raceway module disclosed herein; and
Fig. 38 is a schematic illustration of an aircraft that incorporates a raceway architecture that was assembled using one or more of the examples of the wire assembly systems and methods for assembling an electrical raceway module disclosed herein.

### DETAILED DESCRIPTION

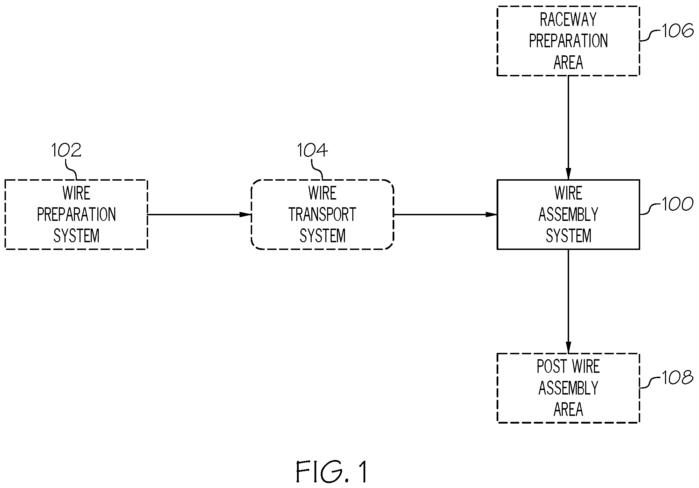

The various examples of wire assembly systems 100 and methods 1400, 1500, 3000 for assembling electrical raceway modules disclosed herein provide techniques for autonomous fabrication of a raceway using robotic manipulators 218 to route individual wires 300 through a raceway assembly fixture 202 and insert the first and second terminated ends 306, 308 into electrical connectors 512. The raceway assembly fixture 202 arrives at the wire assembly system 100 from a raceway preparation area 106 and fully prepared to start automated routing of wires 300 from a wire preparation system 102 (see, e.g., Figs. 1-3). For example, unshielded single conductors, shielded cables, and unjacketed cables may be prepared in the wire preparation system 102 and loaded onto overhead conveyance carriers within a wire transport system 104 for transport to the wire assembly system 100. A post wire assembly area 108 handles manual cable installations, dressing wires 300, and quality inspections. Quadrax, fiber, and coax cables, for example, may be prepared in the wire preparation system 102 and manually routed in the post wire assembly area 108. The output from the post wire assembly area 108 is a completed electrical raceway module ready for installation into an end item (e.g., aircraft).

A spanner bar feeder line to the raceway preparation area 106 creates spanner bar kits for each raceway module build. The kit contains spanner bars for the raceway module build with required flyaway and temporary (i.e., non-flyaway) routing provisions installed. A connector feeder line to the raceway preparation area 106 creates a connector kit for each raceway module build. The kit contains connectors 512 and associated parts for the raceway module build. The kit contains both modular connectors and standard connectors as required.

The wire preparation system 102 prepares individual cables to final lengths with both ends terminated and loaded onto overhead conveyance carriers through primarily autonomous fabrication. The specific autonomous fabrication method is specialized for each type of wire 300. Unshielded single conductors are prepared from cut through crimp. Shielded and unjacketed cables are prepared from cut through modular insert installation. The wire preparation system 102 also prepares individual cables to final lengths with both ends terminated and loaded onto overhead conveyance carriers through dedicated moving lines. Quadrax, coax, fiber and specialty cables are prepared from cut through modular insert or crimp installation. The wire transport system 104 includes an overhead conveyance system to carry wires 300 from the wire preparation system 102 to the wire assembly system 100. The wire transport system 104 may also carry wires 300 to the post wire assembly area 108. The wire transport system 104 provides transporting, sorting and buffering, with redundant paths to accommodate unplanned downtime in upstream and downstream work cells. The raceway preparation area 106 assembles the raceway assembly fixture 202. Flyaway and temporary (i.e., non-flyaway) hardware is installed in preparation for the wire assembly system 100.

The wire assembly system 100 includes a tending robotic manipulator 614 and wire shuttle subsystem 208 to retrieve wire from the wire transport system 104 and position the wire 300 alongside the raceway assembly fixture 202. The wire assembly system 100 implements robotic pick and place of the wire 300 into the raceway assembly fixture 202 and robotic insertion of the first and second ends 306, 308 of the wire 300 into the connectors 512, 518. For unshielded single conductors, crimped ends are inserted into the connectors 512, 518 (e.g., modular or standard). For shielded and unjacketed cables, modular connector inserts are installed into retainers.

The post wire assembly area 108 includes removal of temporary (i.e., non-flyaway) hardware from the raceway assembly fixture 202. The post wire assembly area 108 may also be used for manual routing and installation of cables, such as quadrax, fiber, coax and specialty cables. Dressing, tying, securing and stowing of cables may also be accomplished at the post wire assembly area 108. The final assembly and closing of connectors 512 may also be accomplished at the post wire assembly area 108. The post wire assembly area 108 is used for various final assembly tasks and testing including continuity tests and quality inspections.

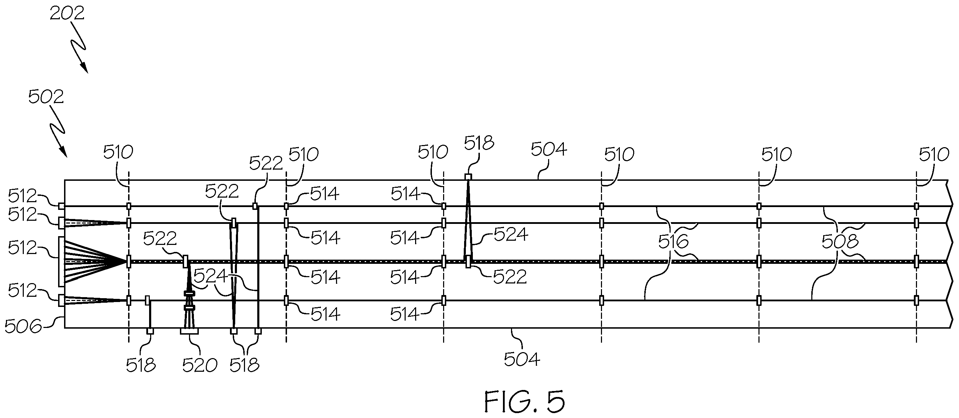

The raceway assembly fixture 202 (see Fig. 5) includes one or more longitudinal routing lanes 516 down which groups of wires 300 are routed. The longitudinal routing lanes 516 typically accommodate wires 300 of only one separation code. The raceway assembly fixture 202 includes non-flyaway wire routing supports 514 for each longitudinal routing lane 516 in alignment with end item frames or structural elements to which the electrical raceway module will be mounted. These non-flyaway wire routing supports 514 shall support the wires 300 running down a given longitudinal routing lane 516 during the automated and manual routing process.

The raceway assembly fixture 202 may also include non-flyaway wire routing supports 522 for purposes of supporting wires 300 breaking out from longitudinal routing lanes 516 to a longitudinal side plate 504 of the raceway assembly fixture 202. These wire routing supports 522 support wires turning from a longitudinal routing lane 516 and running to a bracket for a connector 518 or a printed wiring board 520 mounted on a longitudinal side plate 504 during the assembly of the electrical raceway module, thus forming the wiring breakout. Note that a wire 300 may not run between opposite long sides of the raceway assembly fixture 202 within one frame bay. If a longitudinal routing lane 516 does not have any breakouts within a given frame bay, that longitudinal routing lane 516 does not include wire routing supports 522 for breakouts. Other wire routing supports 514 may be added to the raceway assembly fixture 202, that may be used manually in the post wire assembly area, for example, to further dress and group wires in breakouts. The wire assembly system 100 may route wires over the top of these wire routing supports 514.

In one example, the wire assembly system 100 includes a raceway conveyor table, a wire tending station, a shuttle system, a selective compliance articulated robotic arms, 7-axis robots, a control station, a safety cell enclosure, LIDAR ankle detectors, a light fence and a maintenance cell. Raceway assembly fixture 202 is received from the raceway preparation area and may be manually loaded onto one end of the raceway conveyor, which supports the full length of the raceway assembly fixture 202. The raceway conveyor ingests and positions the raceway assembly fixture 202 into the wire assembly system 100. The wire tending station, shuttle system, selective compliance articulated robotic arms and 7-axis robots are position alongside the raceway assembly fixture 202 to remove individual wires 300 from carriers on the wire transport system 104 and feed the wires 300 to the shuttle system. Emptied carriers continue through the wire transport system 104 to be re-filled at the wire preparation system 102. The shuttle system is an automatic system positioned alongside the raceway assembly fixture 202. The shuttle system includes two shuttles, each holding one end of a wire 300 and capable of moving along a rail to stretch out the wire and position it alongside the raceway assembly fixture 202.

Selective compliance articulated robotic arms are positioned, for example, every about 60,96 cm (i.e., 24 inches) alongside the raceway assembly fixture 202. These robotic arms include an end effector capable of picking wires 300 from the rail of the shuttle system and placing the wires 300 into longitudinal and breakout wire routing supports 514 in the raceway assembly fixture 202.

The 7-axis robots include two 6-axis robots each mounted on a rail (i.e., the 7th axis) alongside the raceway assembly fixture 202, between the shuttle system and the selective compliance articulated robotic arms. The 7-axis robots include end effectors capable of picking wires from the shuttles of the shuttle system and inserting the ends of the wire 300 into connectors 512, 518 installed in the raceway assembly fixture 202. For example, the electrical contacts of single-conductor unshielded wires are robotically inserted into the cavities of connectors 512, 518. This process uses a vision system and force/torque feedback technology to accomplish the insertion. Similarly, modular connector inserts of cables are robotically inserted into openings of modular connector receptacles installed in the raceway assembly fixture 202. This process also uses the vision system and force/torque feedback technology to accomplish the insertion.

The control station provides a human machine interfaces for operators. The human machine interfaces are located at both ends of the raceway assembly fixture 202. The safety cell enclosure surrounds most of the raceway conveyor table, the tending station, the shuttle system, the selective compliance articulated robotic arms and the 7-axis robots (including their rails). This safety cell may span across several adjacent wire assembly systems 100. Portions of the raceway conveyor table may be outside the safety cell walls to facilitate loading and unloading of raceway assembly fixture 202 from the raceway preparation area. Tunnels and light gates may be used to separate operators from activities within the safety enclosure while providing means to load and unload the raceway assembly fixture 202 even while adjacent wire assembly systems 100 are in operation within the safety enclosure. The wire transport system 104 brings wires 300 to the tending station located within the safety enclosure and carries emptied transport carriers out of the safety enclosure.

LIDAR ankle detectors monitor the area just above the floor within the safety enclosure for the entrance of operators. These detectors detect operators in the wire assembly system 100 and ensure the wire assembly system 100 and adjacent wire assembly systems 100 operate in a slow mode while the operator is holding a control pendant safety button in a neutral position (i.e., not fully pressed and not fully released). Light fences shall separate each wire assembly system 100 from each other. If a light fence is triggered, both adjacent wire assembly systems 100 operate in a slow mode while the operator is holding a control pendant safety button in a neutral position (i.e., not fully pressed and not fully released). This mode shall be sustained until no operators are detected by the LIDAR ankle detectors and an operator resumes operation at the control station for each production line. The maintenance cell is an area for equipment repair, maintenance, and spare parts storage.

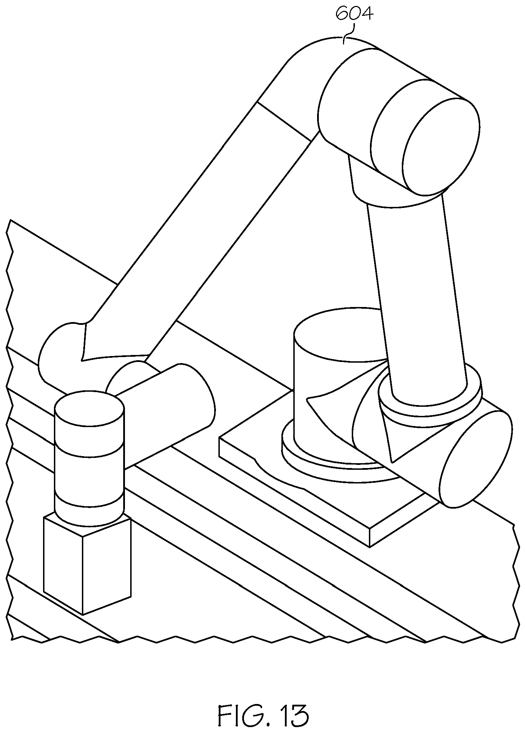

Various examples of methods 1400, 1500, 3000 for assembling electrical raceway modules are shown in Figs. 13-36. The method 1400, 1500, 3000 for assembly electrical raceway modules includes receiving wires 300 and routing the wires 300 in the raceway assembly fixture 202. An operator at the input end of the wire assembly system 100 may load the raceway assembly fixture 202 onto the conveyor table from outside the safety fence. The wire assembly system 100 ingests the raceway through the safety fence via a tunnel also having light gates to protect against entry of the operator or operator limbs. Once the entire raceway assembly fixture 202 has been fed onto the conveyor table, the conveyor table positions and locks it in place. The operator initiates production via the human machine interface. Individual wires 300 arrive on carriers from the wire transport system 104. A tending robot removes the coiled wire 300 from the carrier and places it on an uncoiler, while also placing each end of the wire 300 into a first and second end holders. The end holders hold the electrical contacts, or the modular connector inserts on each end of the wire in a repeatably controlled position and orientation. The second end holder is on a rotating part of the uncoiler pan. Note that the wire transport system 104 may then move out the empty carrier and bring in the next carrier with a next wire 300.

The first end of the wire 300 is then transferred by the tending robot to a first shuttle of the wire shuttle system. As the first shuttle stretches the wire out along the shuttle rail at, for example, approximately 1,83 m/s (i.e., approximately six feet per second). The wire 300 rotates in the uncoiler to feed the wire 300. Note that the second end of the wire 300 will spin with the uncoiler pan. The first shuttle slows, for example, to approximately one foot per second for the last foot of extending the wire from the uncoiler. When the wire 300 is uncoiled, as detected by a camera, the tending robot transfers the second end from the uncoiler to a second shuttle. Note that the tending robot may then start picking the next wire 300 from the wire transport system 104 and placing the wire 300 on the uncoiler.

The shuttle system positions the wire alongside the raceway assembly fixture 202 at a target center point, moving, for example, at approximately ,83 m/s (i.e., approximately six feet per second). The first shuttle may position the first end of the wire 300 to approximately 99% of half the distance beyond the target center point for the wire 300. The second shuttle may position the second end of the wire 300 to approximately 99% of half the distance to the target center point for the wire 300. The shuttles slowly move apart from each other until, for example, approximately 13,36 Newton (i.e., approximately three pounds) of tension is detected by at least one of the first and second shuttles. Then, both shuttles stop and retract by, for example, approximately 0,4% of the length of the wire 300 . The wire 300 is now relatively centered about the target location, stretched out and no longer under tension, with any length tolerances evenly distributed at the first and second ends of the wire. Note that both shuttles include force sensors, though both shuttles stop after either force sensor detects the predetermined force threshold (e.g., 13,36 Newton, i.e., approximately three pounds of tension).

The two 7-axis robots and the selective compliance articulated robotic arms between the two 7-axis robots move to pick the wire from the shuttle system. The two 7-axis robots grasp the contact/insert at first and second ends of the wire 300. After the wire 300 is picked from the shuttle system, the shuttles retract to home positions to receive the next wire 300. The two 7-axis robots and the active selective compliance articulated robotic arms move the wire 300 to the raceway assembly fixture 202, just above the longitudinal wire routing supports 514. The selective compliance articulated robotic arms place the wire in the longitudinal wire routing supports 514 and into any applicable wire routing supports 522 for wires 300 that breakout from the longitudinal routing lanes 516, while the two 7-axis robots continue to hold the wire ends. The selective compliance articulated robotic arms then begin retracting to home positions.

The two 7-axis robots move the wire ends to a point just above respective target electrical connectors 512, following a high path on a spherical surface centered at the last longitudinal wire routing supports 514 or breakout supports 522. This high spherical path prevents slack in the wire 300 from tangling on any formboard features. The two 7-axis robots move to reference points for the target electrical connectors 512, 518. The two 7-axis robots use an insertion subroutine to insert the terminated ends of the wire 300 into the connector 512, 518 and perform retention tests. The two 7-axis robots retract and, if necessary, reposition for the next wire 300. The processes above recur until the remaining wires 300 to be placed in the raceway assembly fixture 202 are placed. An operator at the output end of the wire assembly system 100 unloads the raceway for transfer to the post wire assembly area 108. This is accomplished by, for example, pressing and holding an offload button on the human machine interface, causing the conveyor table to convey the raceway assembly fixture out of the wire assembly system and into the post wire assembly area 108.

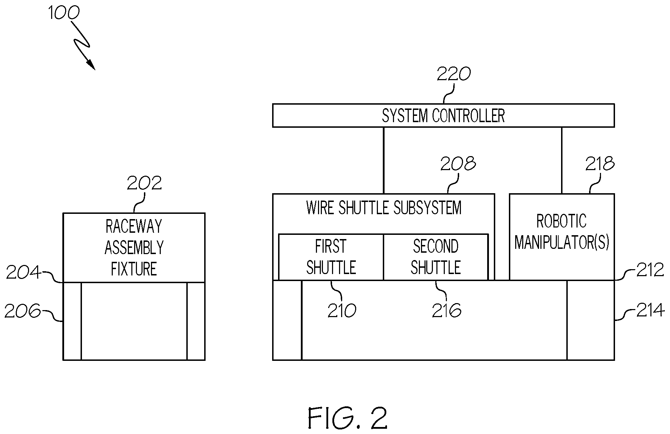

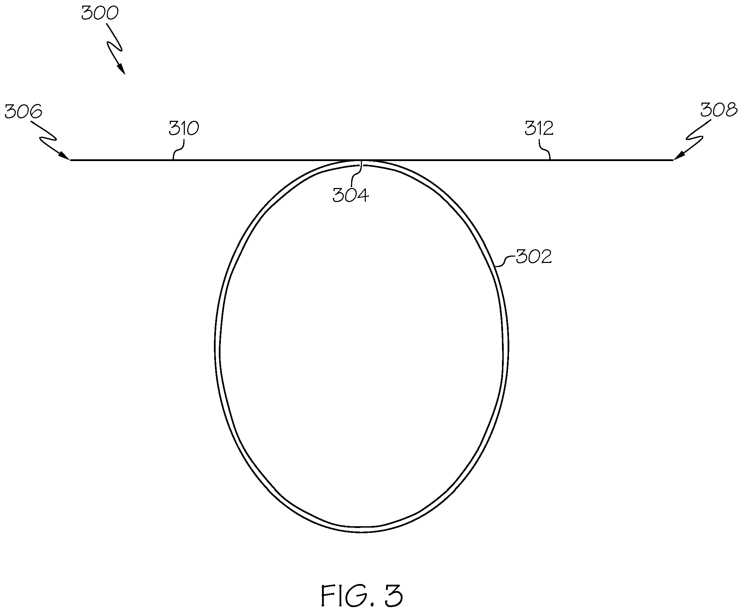

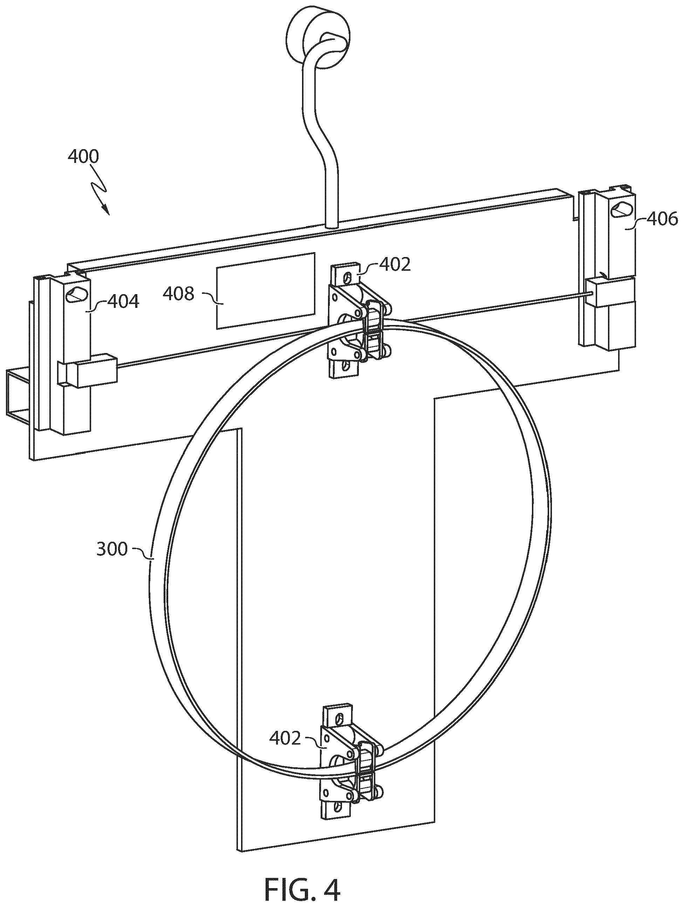

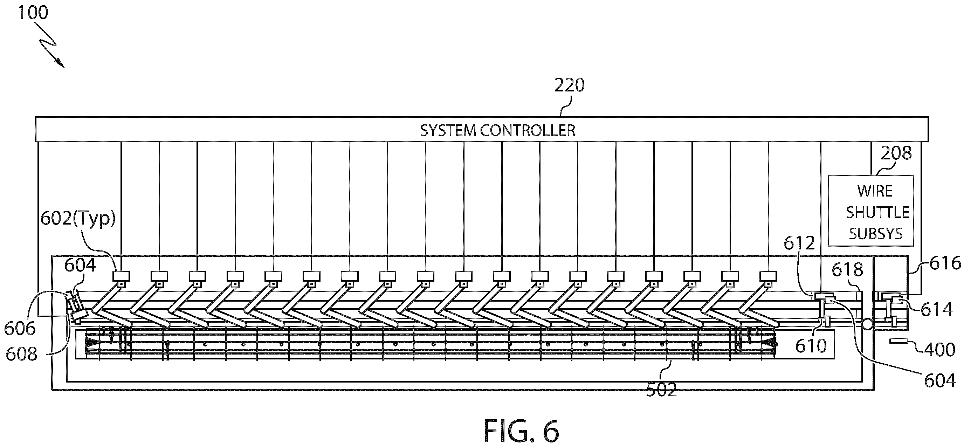

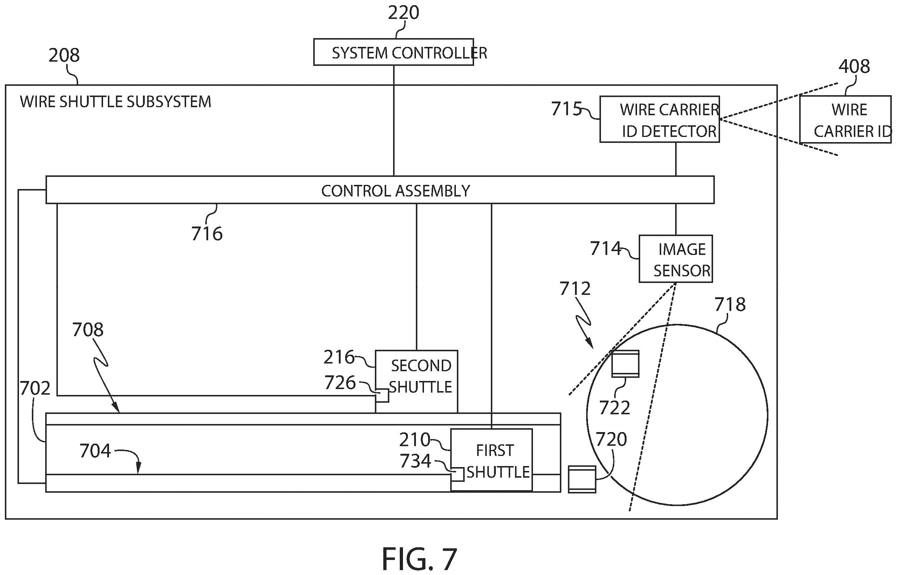

Referring generally to Figs. 1-7, by way of examples, the present disclosure is directed to a wire assembly system 100 for assembling an electrical raceway module. Fig. 1 shows an example of a fabrication system for assembling wires 300, raceway assembly fixtures 202 and electrical raceway modules. Fig. 2 shows an example of the wire assembly system 100 for assembling electrical raceway modules. Fig. 3 shows an example of a wire 300. Fig. 4 shows an example of a wire carrier 400 for transporting the wire 300 of Fig. 3. Fig. 5 shows an example of a raceway assembly fixture 202 of the wire assembly system 100 of Fig. 2. Fig. 6 shows another example of a wire assembly system 100 for assembling electrical raceway modules. Fig. 7 shows an example of a wire shuttle subsystem 208 of the wire assembly system 100 of Fig. 6. With reference to Fig. 6, the item labeled with numeral 400 indicates the position of the wire carrier within the overall system.

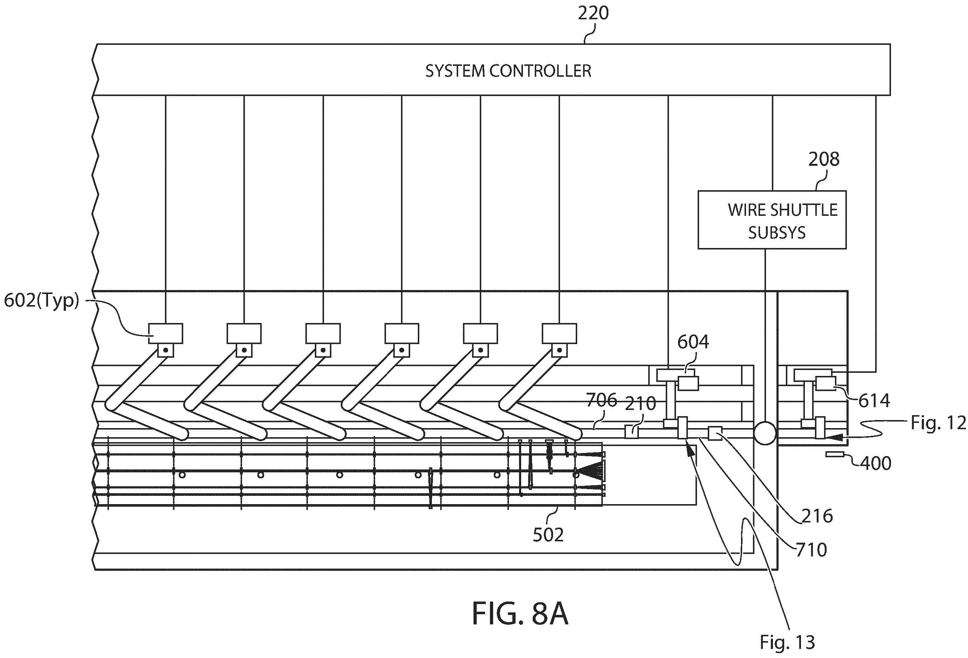

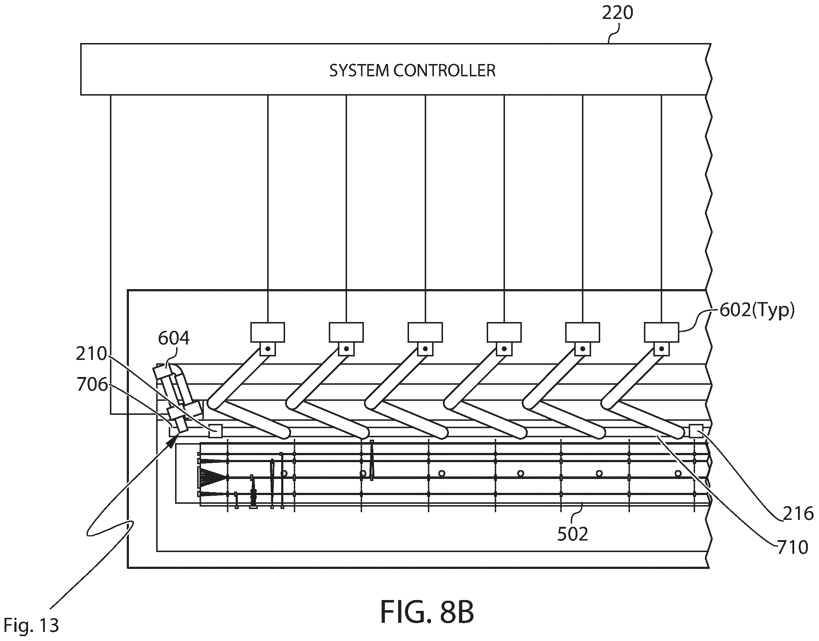

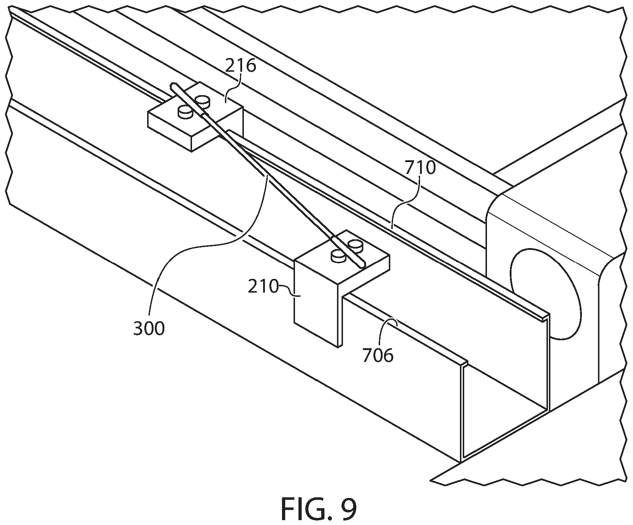

With reference again to Figs. 1-7, in one or more examples, a wire assembly system 100 for assembling an electrical raceway module includes a raceway assembly fixture 202, a wire shuttle subsystem 208, at least one robotic manipulator 218 and a system controller 220. The raceway assembly fixture 202 disposed on a top surface 204 of a workpiece support structure 206. The wire shuttle subsystem 208 includes a first shuttle 210 disposed on an upper surface 212 of a tool support structure 214 and a second shuttle 216 disposed on the upper surface 212. The at least one robotic manipulator 218 is disposed on the upper surface 212 of the tool support structure 214. The system controller 220 in operative communication with the wire shuttle subsystem 208 and the at least one robotic manipulator 218 to control placement of a wire 300 from the first shuttle 210 and the second shuttle 216 to the raceway assembly fixture 202. The first shuttle 210 and the second shuttle 216 are schematically illustrated in Figs. 7, 8A and 8B. In addition, the first shuttle 210 and the second shuttle 216 are illustrated in more details in Fig. 9.

In another example of the wire assembly system 100, the electrical raceway module is configured for installation in an end item as a modular component of an electrical raceway architecture for the end item. In a further example, the end item includes an aircraft, a rotorcraft, a bus, a passenger transport vehicle, a military transport vehicle, an operational military vehicle, a power plant, an unmanned air vehicle, a ship, a ferry, a cruise ship, a military ship, a commercial building, a residential building or any other suitable end item in any suitable combination. In yet another example of the wire assembly system 100, the electrical raceway module is approximately 10,16 cm (i.e., approximately four inches) wide to approximately 91,44 cm (i.e., approximately 36 inches) wide, approximately 20,32 cm (i.e., approximately eight inches) wide to approximately 60,96 cm (i.e., approximately 24 inches) wide, approximately 35,56 cm (i.e., approximately 14 inches) wide to approximately 45,72 cm (i.e., approximately 18 inches) wide or any other suitable width dimension. In still another example of the wire assembly system 100, the electrical raceway module is approximately 60,96 cm (i.e., approximately two feet) long to approximately 30,48 m (i.e., approximately 100 feet) long, approximately 3,05 m (i.e., approximately ten feet) long to approximately 24,38 m (i.e., approximately 80 feet) long, approximately 6,10 m (i.e., approximately 20 feet) long to approximately 18,29 m (i.e., approximately 60 feet) long, approximately 9,14 m (i.e., approximately 30 feet) long to approximately 15,24 m (i.e., approximately 50 feet) long, approximately 12,19 m (i.e., approximately 40 feet) long or any other suitable length dimension.

In still yet another example of the wire assembly system 100, the workpiece support structure 206 includes a conveyor table. In a further example, the conveyor table includes a mobile cart, a table with rollers on a top side, a support structure with a conveyor belt or any other suitable conveyor table in any suitable combination. In another example of the wire assembly system 100, the at least one robotic manipulator 218 includes at least one robotic arm, at least one 4-axis robotic arm, at least one 6-axis robotic arm, at least one 7-axis robotic arm, at least one selective compliance articulated robotic arm, at least one collaborative robot at least one electro-mechanical manipulator, at least one automated mechanical manipulator, at least one semi-automated mechanical manipulator, at least one fixed-actuator tending robot, at least one semi-manual use robot or any other type of robotic manipulator in any suitable combination.

In yet another example of the wire assembly system 100, the wire assembly system 100 is configured to receive the wire 300 on a wire carrier 400 from a wire preparation system 102 via a wire transport system 104. In a further example, the wire carrier 400 includes at least one coil holder 402, a first end clamp 404, a second end clamp 406 and a wire carrier identification element 408. In an even further example, the wire carrier identification element 408 includes a serial number, a barcode, a machine-readable code, a quick-response code, a glyph code, a radio frequency identification tag, a radio frequency identification label or any other suitable identification element in any suitable combination. In another further example, as received, the wire 300 includes a coil 302 with a breakout point 304 at which a first terminated end 306 of the wire 300 and a second terminated end 308 of the wire 300 break out from the coil 302. The wire 300 also includes a first wire marker 310 proximate the first terminated end 306 and a second wire marker 312 proximate the second terminated end 308. In yet another further example, the wire 300 includes a single conductor, a twisted pair of conductors, a multiconductor cable, a shielded cable, an unjacketed cable, a coaxial cable, a matched-impedance cable, a fiber optic cable or any other suitable type of wire or cable in any suitable combination.

In still another example of the wire assembly system 100, the raceway assembly fixture 202 includes a raceway framework 502, electrical connectors 512 and wire routing supports 514. The raceway framework 502 includes longitudinal side plates 504, lateral end plates 506, longitudinal support members 508 between the lateral end plates 506 and lateral support members 510 between the longitudinal side plates 504. The electrical connectors 512 are disposed proximate the lateral end plates 506. The wire routing supports 514 mounted on the lateral support members 510 to define longitudinal routing lanes 516. In a further example, the electrical connectors 512 includes a modular connector, a standard connector or any other suitable type of connector in any suitable combination. In another further example, the raceway assembly fixture 202 also includes at least one additional electrical connector 518, at least one printed wiring board 520 and breakout wiring supports 522. The at least one additional electrical connector 518 is disposed proximate at least one of the longitudinal side plates 504. The at least one printed wiring board 520 mounted on one or more of the longitudinal side plates 504, one or more of the lateral end plates 506, one or more of the longitudinal support members 508, one or more of the lateral support members 510 or any other suitable mounting surface in any suitable combination. The breakout wiring supports 522 mounted on the lateral support members 510 to define lateral routing lanes 524 breaking out from one or more of the longitudinal routing lanes 516. The raceway framework 502 shown in Fig. 5 is also schematically represented in Figs. 6, 8A and 8B.

In still yet another example of the wire assembly system 100, the first shuttle 210 is configured to receive and temporarily retain a first terminated end 306 of a wire 300 and the second shuttle 216 is configured to receive and temporarily retain a second terminated end 308 of the wire 300. The system controller 220 and the wire shuttle subsystem 208 are configured to position the first shuttle 210 and the second shuttle 216 to extend the wire 300 longitudinally on the upper surface 212 of the tool support structure 214. In a further example, the system controller 220, the wire shuttle subsystem 208 and the at least one robotic manipulator 218 are configured to place the wire 300 with the first terminated end 306 and the second terminated end 308 at a predetermined location in the raceway assembly fixture 202.

In another further example, the at least one robotic manipulator 218 includes at least one transfer robotic manipulator 602 mounted on the upper surface 212 of the tool support structure 214. The at least one transfer robotic manipulator 602 configured to pick the wire 300 from between the first shuttle 210 and the second shuttle 216 and place the wire 300 in one or more wire routing support 514 at predetermined locations in the raceway assembly fixture 202. In an even further example, the at least one transfer robotic manipulator 602 includes least one robotic arm, at least one selective compliance articulated robotic arm, at least one collaborative robot or any suitable robotic manipulator in any suitable combination. In another even further example, the at least one transfer robotic manipulator 602 includes a plurality of transfer robotic manipulators 602 longitudinally spaced apart along the upper surface 212 of the tool support structure 214. In an even yet further example, the plurality of transfer robotic manipulators 602 are spaced apart by at least one of approximately 30,48 cm (i.e., approximately one foot) to approximately 60,96 cm (i.e., approximately two feet), approximately 60,96 cm (i.e., approximately two feet) to approximately 91,44 cm (i.e., approximately three feet), approximately 91,44 cm (i.e., approximately three feet) to approximately 121,92 cm (i.e., approximately four feet) or any other suitable spacing in any suitable combination.

In yet another further example, the at least one robotic manipulator 218 includes at least one insertion robotic manipulator 604 disposed on the upper surface 212 of the tool support structure 214, the at least one insertion robotic manipulator 604 configured to pick the first terminated end 306 of the wire 300 from the first shuttle 210 and to insert the first terminated end 306 in a predetermined origination electrical connector 512, 518 at a first predetermined location in the raceway assembly fixture 202. In an even further example, the at least one insertion robotic manipulator 604 includes at least one robotic arm, at least one 6-axis robotic arm, at least one 7-axis robotic arm, at least one collaborative robot or any other suitable robotic manipulator in any suitable combinations. In another even further example, the at least one insertion robotic manipulator 604 is configured to pick the second terminated end 308 of the wire 300 from the second shuttle 216 and to insert the second terminated end 308 in predetermined destination electrical connector 512, 518 at a second predetermined location in the raceway assembly fixture 202.

In still another further example, the at least one robotic manipulator 218 includes a first insertion robotic manipulator 606 and a second insertion robotic manipulator 610. The first insertion robotic manipulator 606 is mounted on a first robotic transfer unit 608 disposed on the upper surface 212 of the tool support structure 214 and configured to translate the first insertion robotic manipulator 606 a length of the raceway assembly fixture 202. The first insertion robotic manipulator 606, in conjunction with the first robotic transfer unit 608, configured to pick the first terminated end 306 of the wire 300 from the first shuttle 210 and to insert the first terminated end 306 in a predetermined origination electrical connector 512, 518 at a first predetermined location in the raceway assembly fixture 202. The second insertion robotic manipulator 610 is mounted on a second robotic transfer unit 612 disposed on the upper surface 212 adjacent to the first robotic transfer unit 608 and configured to translate the second insertion robotic manipulator 610 the length of the raceway assembly fixture 202. The second insertion robotic manipulator 610, in conjunction with the second robotic transfer unit 612, configured to pick the second terminated end 308 of the wire 300 from the second shuttle 216 and to insert the second terminated end 308 in a predetermined destination electrical connector 512, 518 at a second predetermined location in the raceway assembly fixture 202.

In still yet another example of the wire assembly system 100, the wire shuttle subsystem 208 also includes a longitudinal trough 702, a first transport assembly 704, a second transport assembly 708, an uncoiler assembly 712, an image sensor 714, a wire carrier identification detector 715 and a control assembly 716. The longitudinal trough 702 is disposed on the upper surface 212 of the tool support structure 214 and extending alongside the raceway assembly fixture 202. The first transport assembly 704 mechanically connected to the first shuttle 210 to position the first shuttle 210 along a first longitudinal track 706 of the longitudinal trough 702. The second transport assembly 708 mechanically connected to the second shuttle 216 to position the second shuttle 216 along a second longitudinal track 710 of the longitudinal trough 702. The uncoiler assembly 712 is disposed on the upper surface 212 of the tool support structure 214 and configured to hold a coil 302 of the wire 300, a first terminated end 306 of the wire 300 and a second terminated end 308 of the wire 300. The image sensor 714 proximate the uncoiler assembly 712 and configured to selectively capture images of the first terminated end 306 and the second terminated end 308 and images showing a status of the coil 302 on the uncoiler assembly 712. The wire carrier identification detector 715 proximate a wire carrier 400 on a wire transport system 104. The wire carrier 400 configured to transport the wire 300 from a wire preparation system 102 to the wire assembly system 100. The wire carrier identification detector 715 is configured to selectively capture an identification number from a wire carrier identification element 408 on the wire carrier 400. The control assembly 716 in operative communication with the first transport assembly 704, the second transport assembly 708, the uncoiler assembly 712, the image sensor 714, the wire carrier identification detector 715 and the system controller 220 to control transfer of the first terminated end 306 from the uncoiler assembly 712 to the first shuttle 210, movement of the first shuttle 210 along the first longitudinal track 706, unwinding of the coil 302 from the uncoiler assembly 712, placement of the second terminated end 308 from the uncoiler assembly 712 to the second shuttle 216 and movement of the second shuttle 216 along the second longitudinal track 710.

In a further example, the first transport assembly 704 includes a stepper motor, a DC motor, an encoder device, a position sensor, a belt drive assembly, a screw-drive assembly, a chain drive assembly or any other suitable drive element in any suitable combination. In another further example, the second transport assembly 708 includes a stepper motor, a DC motor, an encoder device, a position sensor, a belt drive assembly, a screw-drive assembly, a chain drive assembly or any other suitable drive element in any suitable combination. In yet another further example, the image sensor 714 includes a digital camera, a charge-coupled device, an active-pixel device, an optical scanner, a laser scanner or any other suitable image sensor in any suitable combination. In still another further example, the wire carrier identification detector 715 includes a digital camera, a charge-coupled device, an active-pixel device, an optical scanner, a laser scanner, a radio frequency identification reader, a radio frequency identification transponder or any other suitable detector in any suitable combination.

In an even further example, the uncoiler assembly 712 includes a rotatable plate 718, a first end holder 720 and a second end holder 722. The rotatable plate 718 configured to temporarily hold the coil 302 of the wire 300 and to unwind the wire 300 in response to tension on the first terminated end 306 in conjunction with movement of the first shuttle 210 along the first longitudinal track 706 of the wire shuttle subsystem 208. The first end holder 720 is disposed proximate the rotatable plate 718 and configured to temporarily hold the first terminated end 306 of the wire 300. The second end holder 722 mounted on the rotatable plate 718 and configured to hold the second terminated end 308 of the wire 300. In an even yet further example, the first end holder 720 includes the first shuttle 210 when positioned on the first longitudinal track 706 of the longitudinal trough 702 proximate the rotatable plate 718. In another even yet further example, the wire assembly system 100 also includes a tending robotic manipulator 614 mounted on a support platform 616 adjacent to a proximal end area 618 of the tool support structure 214. The tending robotic manipulator 614 is configured to pick the coil 302 of the wire 300, the first terminated end 306 and the second terminated end 308 from a wire carrier 400 on a wire transport system 104. The tending robotic manipulator is also configured to place the coil 302 on the rotatable plate 718 of the uncoiler assembly 712, the first terminated end 306 on the first end holder 720 and the second terminated end 308 on the second end holder 722.

In an even still further example, the tending robotic manipulator 614 includes a robotic arm, a 6-axis robotic arm, a collaborative robot, an electro-mechanical manipulator, an automated mechanical manipulator, a semi-automated mechanical manipulator, a fixed-actuator tending robot, a semi-manual use robot or any other suitable type of robotic manipulator in any suitable combination. In another even still further example, the system controller 220 and the tending robotic manipulator 614 are configured to pick the first terminated end 306 of the wire 300 from the first end holder 720 and place the first terminated end 306 on the first shuttle 210. The system controller 220 and the tending robotic manipulator 614 are also configured to pick the second terminated end 308 of the wire 300 from the second end holder 722 and place the second terminated end 308 on the second shuttle 216 after the system controller 220 detects that the wire 300 is unwound from the rotatable plate 718.

In an alternate example, a second tending robotic manipulator or any other robotic manipulator may be used to pick the first terminated end 306 of the wire 300 from the first end holder 720 and place the first terminated end 306 on the first shuttle 210. In a similar alternate example, the second tending robotic manipulator or any other robotic manipulator may be used to pick the second terminated end 308 of the wire 300 from the second end holder 722 and place the second terminated end 308 on the second shuttle 216 after the system controller 220 detects that the wire 300 is unwound from the rotatable plate 718. These alternate examples permit the tending robotic manipulator 614 to prepare for transferring the next wire 300 from the wire carrier 400 to the uncoiler assembly 712 while the current wire 300 is unwound from the rotatable plate 718.

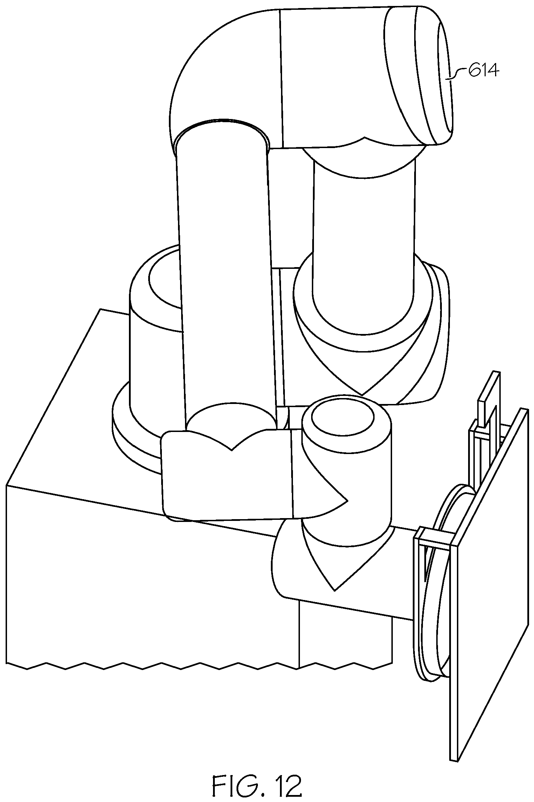

Referring generally to Figs. 1-7, 12 and 14-29, by way of examples, the present disclosure is directed to a method 1400, 1500 for assembling an electrical raceway module. Fig. 1 shows an example of a fabrication system for assembling wires 300, raceway assembly fixtures 202 and electrical raceway modules. Fig. 2 shows an example of a wire assembly system 100 for assembling electrical raceway modules. Fig. 3 shows an example of a wire 300. Fig. 4 shows an example of a wire carrier 400 for transporting the wire 300 of Fig. 3. Fig. 5 shows an example of a raceway assembly fixture 202 of the wire assembly system 100 of Fig. 2. Fig. 6 shows another example of a wire assembly system 100 for assembling electrical raceway modules. Fig. 7 shows an example of a wire shuttle subsystem 208 of the wire assembly system 100 of Fig. 6. Fig. 12 shows an example of a tending robotic manipulator 614 in the wire assembly system 100 of Fig. 6.

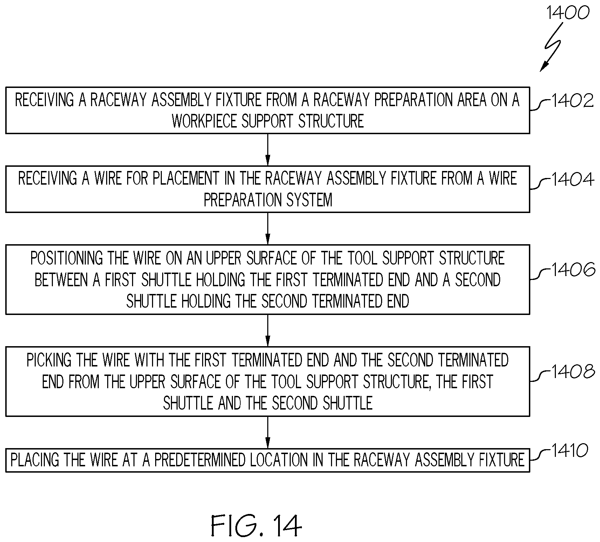

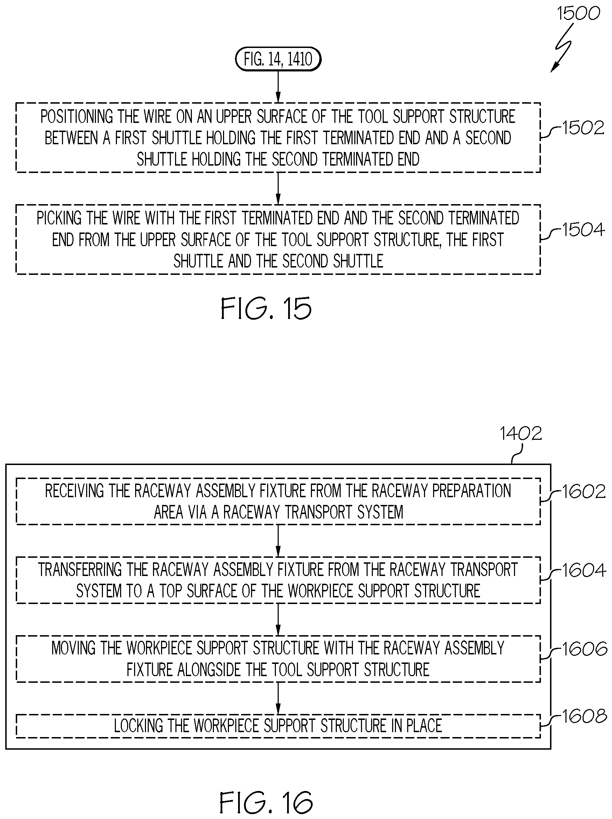

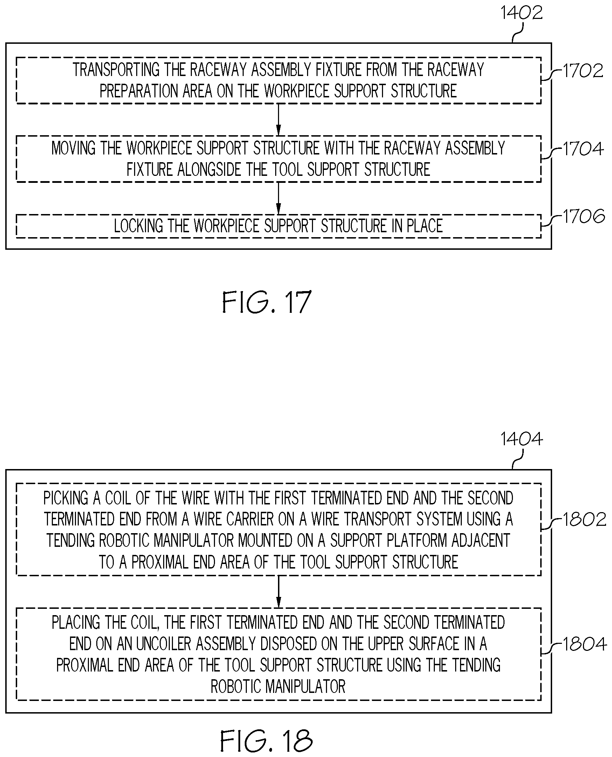

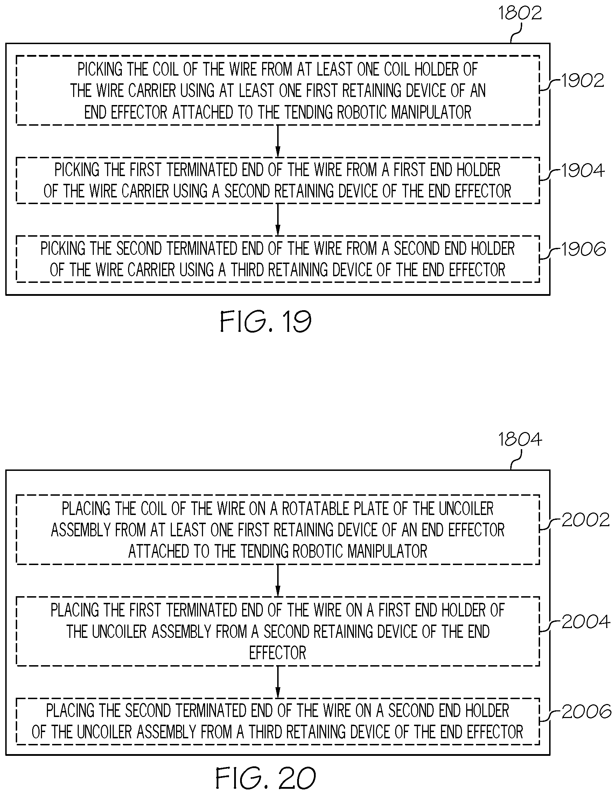

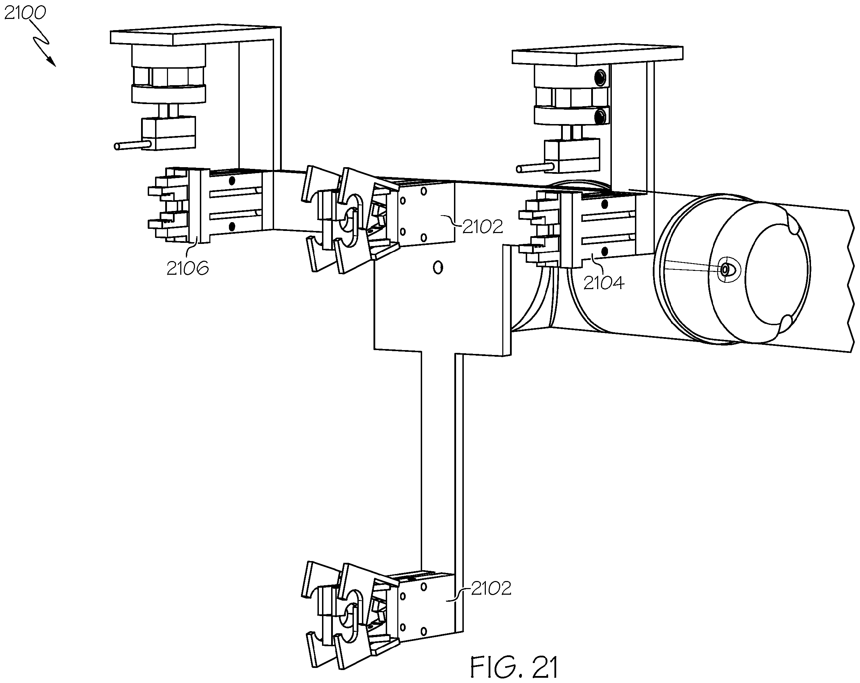

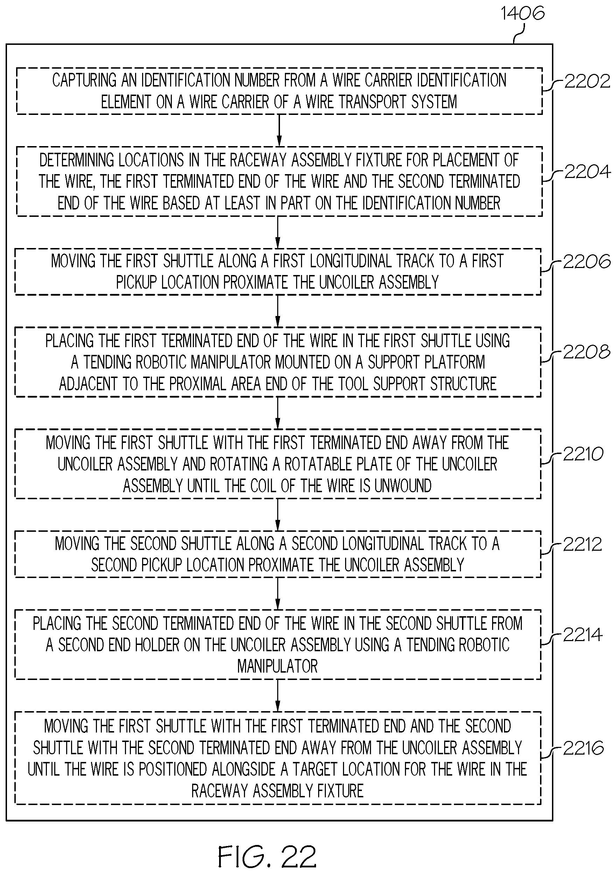

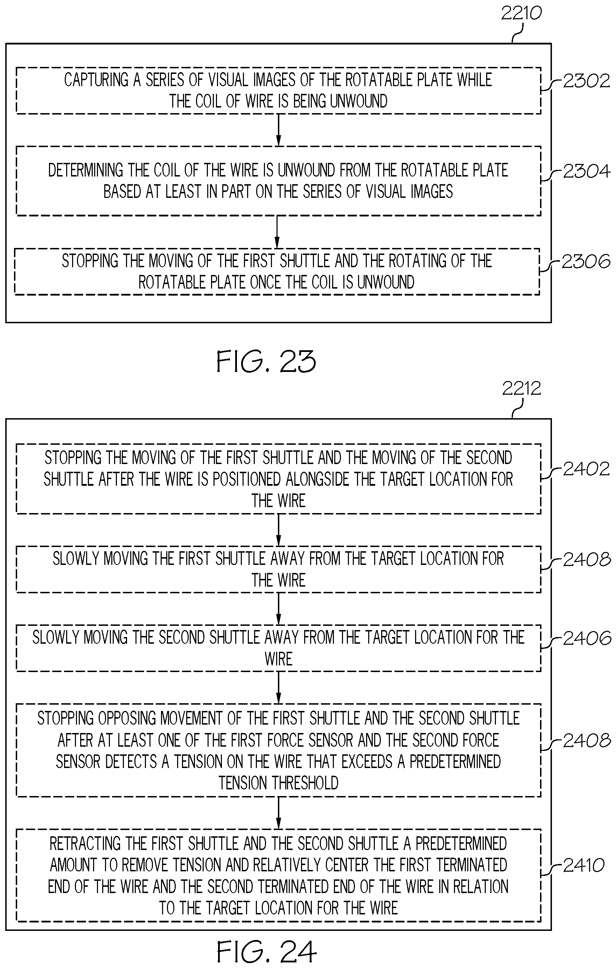

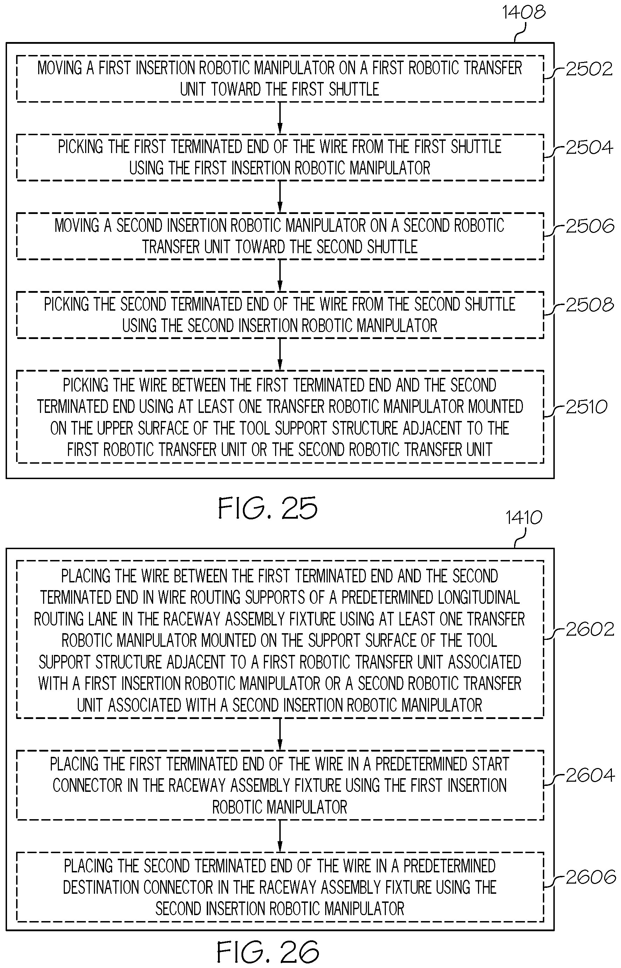

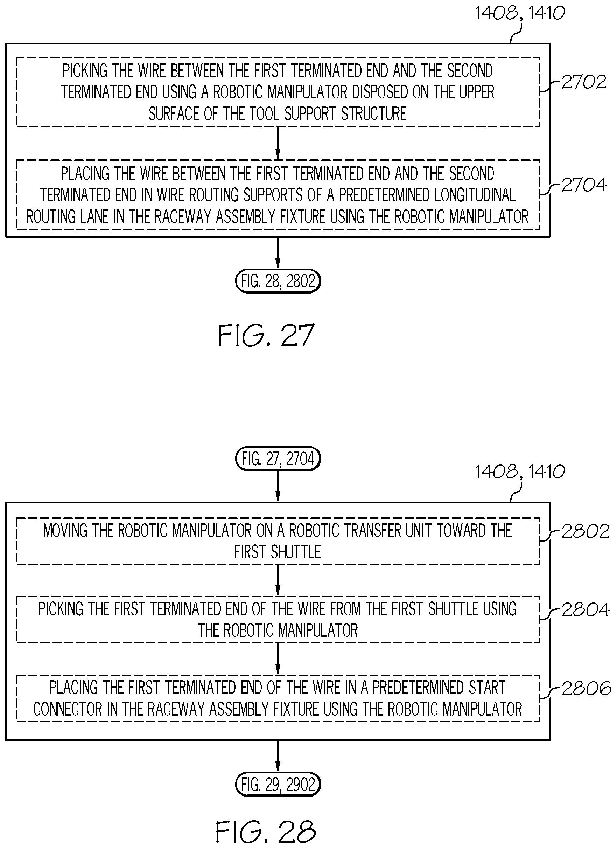

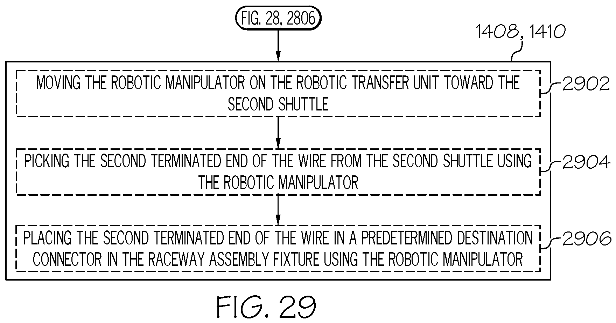

Fig. 14 provides an example of the method 1400 for assembling an electrical raceway module. Fig. 15, in combination with Fig. 14, provides an example of the method 1500 for assembling an electrical raceway module. Fig. 16 provides an example of the receiving 1402 of the raceway assembly fixture in the method 1400 of Fig. 14. Fig. 17 provides another example of the receiving 1402 of the raceway assembly fixture in the method 1400 of Fig. 14. Fig. 18 provides an example of the receiving 1404 of the wire 300 in the method 1400 of Fig. 14. Fig. 19 provides an example of the picking 1802 of the coil 302 of the wire 300 of Fig. 18. Fig. 20 provides an example of the placing 1804 of the coil 302, the first terminated end 306 and the second terminated end 308 of Fig. 18; Fig. 21 shows an example of an end effector 2100 for the tending robotic manipulator 614 of Fig. 12. Fig. 22 is a flow diagram of an example of the positioning of the wire in the method 1400 of Fig. 14. Fig. 23 shows an example of the moving 2210 of the first shuttle 210 of Fig. 22. Fig. 24 shows an example of the moving 2212 of the second shuttle 216 of Fig. 22. Fig. 25 shows an example of the picking 1408 of the wire 300 in the method 1400 of Fig. 14. Fig. 26 shows an example of the placing 1410 of the wire 300 in the method 1400 of Fig. 14. Fig. 27 shows another example of the picking 1408 and the placing 1410 of the wire 300 in the method 1400 of Fig. 14. Fig. 28, in combination with Fig. 27, shows yet another example of the picking 1408 and the placing 1409 of the wire 300 in the method 1400 of Fig. 14. Fig. 29, in combination with Figs. 27 and 28, shows still another example of the picking 1408 and the placing 1410 of the wire 300 in the method 1400 of Fig. 14.

With reference again to Figs. 1-7, 12 and 14-29, in one or more examples, a method 1400 (see Fig. 14) for assembling an electrical raceway module includes receiving 1402 a raceway assembly fixture 202 from a raceway preparation area 106 on a workpiece support structure 206. The workpiece support structure 206 is alongside a tool support structure 214. At 1404, a wire 300 is received for placement in the raceway assembly fixture 202 from a wire preparation system 102. The wire 300 includes a first terminated end 306 and a second terminated end 308. At 1406, the wire 300 is positioned on an upper surface 212 of the tool support structure 214 between a first shuttle 210 holding the first terminated end 306 and a second shuttle 216 holding the second terminated end 308. At 1408, the wire 300 with the first terminated end 306 and the second terminated end 308 is picked from the upper surface 212 of the tool support structure 214. At 1410, the wire 300 is placed at a predetermined location in the raceway assembly fixture 202.

In another example of the method 1400, the electrical raceway module is configured for installation in an end item as a modular component of an electrical raceway architecture for the end item. In a further example, the end item includes an aircraft, a rotorcraft, an unmanned air vehicle, a bus, a passenger transport vehicle, a military transport vehicle, an operational military vehicle, a passenger ship, a cargo ship, a military ship, a commercial building, a residential building or any other suitable end item in any suitable combination. In yet another example of the method 1400, the electrical raceway module is approximately 10,16 cm (i.e., approximately four inches) wide to approximately 91,44 cm (i.e., approximately 36 inches) wide, approximately 20,32 cm (i.e., approximately eight inches) wide to approximately 60,96 cm (i.e., approximately 60,96 cm (i.e., approximately 24 inches) wide, approximately 35,56 cm (i.e., approximately 14 inches) wide to approximately 45,72 (i.e., approximately 18 inches) wide or any other suitable width dimension. In still another example of the method 1400, the electrical raceway module is approximately 0,61 m (i.e., approximately two feet) long to approximately 30,48 m (i.e., approximately 100 feet) long, approximately 3,05 m (i.e., approximately ten feet) long to approximately 24,38 m (i.e., approximately 80 feet) long, approximately 6,10 m (i.e., approximately 20 feet) long to approximately 18,29 m (i.e., approximately 60 feet) long, approximately 9,14 m (i.e., approximately 30 feet) long to approximately 15,24 m (i.e., approximately 50 feet) long, approximately 12,19 m (i.e., approximately 40 feet) long or any other suitable length dimension.

In still yet another example of the method 1400, the workpiece support structure 206 includes a conveyor table. In a further example, the conveyor table includes a mobile cart, a table with rollers on a top side, a support structure with a conveyor belt or any other suitable conveyor table in any suitable combination. In another example, the method 1400 is implemented in a wire assembly system 100 configured to receive the wire 300 on a wire carrier 400 from a wire preparation system 102 via a wire transport system 104. In a further example, as received, the wire 300 includes a coil 302 with a breakout point 304 at which a first terminated end 306 of the wire 300 and a second terminated end 308 of the wire 300 break out from the coil 302. The wire 300 also includes a first wire marker 310 proximate the first terminated end 306 and a second wire marker 312 proximate the second terminated end 308. In another further example, the wire 300 includes a single conductor, a twisted pair of conductors, a multiconductor cable, a shielded cable, an unjacketed cable, a coaxial cable, a matched-impedance cable, a fiber optic cable or any other suitable type of wire or cable in any suitable combination.

With reference again to Figs. 1-3, 14 and 15, in one or more examples, a method 1500 (see Fig. 15) for assembling an electrical raceway module includes the method 1400 of Fig. 14 and continues from 1410 to 1502 where the receiving 1402, 1404, the positioning 1406, the picking 1408 and the placing 1410 of the wire 300 are repeated for a next wire 300 until all wires designated for autonomous placement in the raceway assembly fixture 202 are placed. In another example, the method 1500 also includes transferring 1504 the raceway assembly fixture 202 to a post wire assembly area 108 for manual assembly processes on the raceway assembly fixture 202 to prepare the electrical raceway module for installation in an end item.

With reference again to Figs. 1-7, 12 and 14-29, in another example of the method 1400, the receiving 1402 of the raceway assembly fixture 202 includes receiving 1602 (see Fig. 16) the raceway assembly fixture 202 from the raceway preparation area 106 via a raceway transport system. At 1604, the raceway assembly fixture 202 is transferred from the raceway transport system to a top surface 204 of the workpiece support structure 206. At 1606, the workpiece support structure 206 with the raceway assembly fixture 202 is moved alongside the tool support structure 214. At 1608, the workpiece support structure 206 is locked in place. In yet another example of the method 1400, the receiving 1402 of the raceway assembly fixture 202 includes transporting 1702 (see Fig. 17) the raceway assembly fixture 202 from the raceway preparation area 106 on the workpiece support structure 206. At 1704, the workpiece support structure 206 with the raceway assembly fixture 202 is moved alongside the tool support structure 214. At 1706, the workpiece support structure 206 is locked in place.

In still another example of the method 1400, the receiving 1404 of the wire 300 includes picking 1802 (see Fig. 18) a coil 302 of the wire 300 with the first terminated end 306 and the second terminated end 308 from a wire carrier 400 on a wire transport system 104 using a tending robotic manipulator 614 mounted on a support platform 616 adjacent to a proximal end area 618 of the tool support structure 214. At 1804, the coil 302, the first terminated end 306 and the second terminated end 308 is placed on an uncoiler assembly 712 disposed on the upper surface 212 at a proximal end area 618 of the tool support structure 214 using the tending robotic manipulator 614. In a further example, the picking 1802 of the coil 302 includes picking 1902 (see Fig. 19) the coil 302 of the wire 300 from at least one coil holder 402 of the wire carrier 400 using at least one first retaining device 2102 of an end effector 2100 attached to the tending robotic manipulator 614. At 1904, the first terminated end 306 of the wire 300 is picked from a first end clamp 404 of the wire carrier 400 using a second retaining device 2104 of the end effector 2100. At 1906, the second terminated end 308 of the wire 300 is picked from a second end clamp 406 of the wire carrier 400 using a third retaining device 2106 of the end effector 2100.

In another further example, the placing 1804 of the coil 302 includes placing 2002 (see Fig. 20) the coil 302 of the wire 300 on a rotatable plate 718 of the uncoiler assembly 712 from at least one first retaining device 2102 of an end effector 2100 attached to the tending robotic manipulator 614. At 2004, the first terminated end 306 of the wire 300 is placed on a first end holder 720 of the uncoiler assembly 712 from a second retaining device 2104 of the end effector 2100. At 2006, the second terminated end 308 of the wire 300 is placed on a second end holder 722 of the uncoiler assembly 712 from a third retaining device 2106 of the end effector 2100. In an even further example, the first end holder 720 includes the first shuttle 210 when positioned proximate the rotatable plate 718.

In still yet another example of the method 1400, a coil 302 of the wire 300 with the first terminated end 306 and the second terminated end 308 is positioned at an uncoiler assembly 712 on the upper surface 212 at a proximal end area 618 of the tool support structure 214. In this example, the positioning 1406 of the wire 300 includes capturing 2202 (see Fig. 22) an identification number from a wire carrier identification element 408 on a wire carrier 400 of a wire transport system 104. The identification number uniquely identifying the wire carrier 400 in relation to other wire carriers on the wire transport system 104. The identification number correlating to a unique wire number associated with the wire 300 in relation to other wires of the electrical raceway module. At 2204, locations in the raceway assembly fixture 202 are determined for placement of the wire 300, the first terminated end 306 of the wire 300 and the second terminated end 308 of the wire 300 based at least in part on the identification number. At 2206, the first shuttle 210 is moved along a first longitudinal track 706 to a first pickup location proximate the uncoiler assembly 712. At 2208, the first terminated end 306 of the wire 300 is placed in the first shuttle 210 using a tending robotic manipulator 614 mounted on a support platform 616 adjacent to the proximal end area 618 of the tool support structure 214. At 2210, the first shuttle 210 with the first terminated end 306 is moved away from the uncoiler assembly 712 and rotating a rotatable plate 718 of the uncoiler assembly 712 until the coil 302 of the wire 300 is unwound. At 2212, the second shuttle 216 is moved along a second longitudinal track 710 to a second pickup location proximate the uncoiler assembly 712. At 2214, the second terminated end 308 of the wire 300 is placed in the second shuttle 216 from a second end holder 722 on the uncoiler assembly 712 using a tending robotic manipulator 614. At 2216, the first shuttle 210 with the first terminated end 306 and the second shuttle 216 with the second terminated end 308 are moved away from the uncoiler assembly 712 until the wire 300 is positioned alongside a target location for the wire 300 in the raceway assembly fixture 202.

In a further example, the moving 2210 of the first shuttle 210 and the rotating of the rotatable plate 718 include capturing 2302 (see Fig. 23) a series of visual images of the rotatable plate 718 while the coil 302 of wire 300 is being unwound. At 2304, determining the coil 302 of the wire 300 is unwound from the rotatable plate 718 is based at least in part on the series of visual images. At 2306, the moving 2210 of the first shuttle 210 and the rotating of the rotatable plate 718 stops once the coil 302 is unwound.

In another further example, the first shuttle 210 includes a first force sensor 724 and the second shuttle 216 includes a second force sensor 726. The moving 2216 of the first shuttle 210 and the moving of the second shuttle 216 includes stopping 2402 (see Fig. 24) the moving 2216 of the first shuttle 210 and the moving of the second shuttle 216 after the wire 300 is positioned alongside the target location for the wire 300. At 2404, the first shuttle 210 is slowly moved away from the target location for the wire 300. At 2406, the second shuttle 216 is slowly moved away from the target location for the wire 300. At 2408, opposing movement of the first shuttle 210 and the second shuttle 216 is stopped after at least one of the first force sensor 724 and the second force sensor 726 detects a tension on the wire 300 that exceeds a predetermined tension threshold. At 2410, the first shuttle 210 and the second shuttle 216 are retracted a predetermined amount to remove tension and relatively center the first terminated end 306 of the wire 300 and the second terminated end 308 of the wire 300 in relation to the target location for the wire 300.

In an even further example, the predetermined tension threshold includes approximately 4,45 Newton (i.e., approximately one pound) tension to approximately 22,24 Newton (i.e., approximately five pounds) tension, approximately 2,90 Newton (i.e., approximately two pounds) tension to approximately 17,79 Newton (i.e., approximately four pounds) tension, approximately 13,34 Newton (i.e., approximately three pounds) tension or any other suitable amount of tension. In another even further example, the predetermined amount of retraction toward the target location for the wire 300 includes approximately 0,1 percent to approximately 0,7 percent of a length of the wire 300, approximately 0,2 percent to approximately 0,6 percent of the length of the wire 300, approximately 0,3 percent to approximately 0,5 percent of the length of the wire 300, approximately 0,4 percent of the length of the wire 300 or any other suitable retraction distance.

In another example of the method 1400, the picking 1408 of the wire 300 includes moving 2502 (see Fig. 25) a first insertion robotic manipulator 606 on a first robotic transfer unit 608 toward the first shuttle 210. The first insertion robotic manipulator 606 mounted on the first robotic transfer unit 608. The first robotic transfer unit 608 disposed on the upper surface 212 of the tool support structure 214. At 2504, the first terminated end 306 of the wire 300 is picked from the first shuttle 210 using the first insertion robotic manipulator 606. At 2506, a second insertion robotic manipulator 610 on a second robotic transfer unit 612 is moved toward the second shuttle 216. The second insertion robotic manipulator 610 is mounted on the second robotic transfer unit 612. The second robotic transfer unit 612 disposed on the upper surface 212 of the tool support structure 214 adjacent to the first robotic transfer unit 608. At 2508, the second terminated end 308 of the wire 300 is picked from the second shuttle 216 using the second insertion robotic manipulator 610. At 2510, the wire 300 between the first terminated end 306 and the second terminated end 308 is picked using at least one transfer robotic manipulator 602 mounted on the upper surface 212 of the tool support structure 214 adjacent to the first robotic transfer unit 608 or the second robotic transfer unit 612. In a further example, multiple transfer robotic manipulators 602 between the first terminated end 306 of the wire 300 and the second terminated end 308 of the wire 300 are spaced along the upper surface 212 of the tool support structure 214 by a predetermined distance. In an even further example, the predetermined distance includes approximately 30,48 cm (i.e., approximately one foot) to approximately 91,44 cm (i.e., approximately three feet), approximately 45,72 cm (i.e., approximately 1,5 feet) to approximately 76,20 cm (i.e., approximately 2,5 feet), approximately 60,96 cm (i.e., approximately two feet) or any other suitable distance.

In yet another example of the method 1400, the placing 1410 of the wire 300 includes placing 2602 (see Fig. 26) the wire 300 between the first terminated end 306 and the second terminated end 308 in wire routing supports 514, 522 of a predetermined longitudinal routing lane 516 in the raceway assembly fixture 202 using at least one transfer robotic manipulator 602 mounted on the upper surface 212 of the tool support structure 214 adjacent to a first robotic transfer unit 608 associated with a first insertion robotic manipulator 606 or a second robotic transfer unit 612 associated with a second insertion robotic manipulator 610. The first insertion robotic manipulator 606 mounted on the first robotic transfer unit 608. The first robotic transfer unit 608 disposed on the upper surface 212 of the tool support structure 214. The second insertion robotic manipulator 610 is mounted on the second robotic transfer unit 612. The second robotic transfer unit 612 disposed on the upper surface 212 of the tool support structure 214. At 2604, the first terminated end 306 of the wire 300 is positioned in a predetermined origination electrical connector 512, 518 in the raceway assembly fixture 202 using the first insertion robotic manipulator 606. At 2606, the second terminated end 308 of the wire 300 is placed in a predetermined destination electrical connector 512, 518 in the raceway assembly fixture 202 using the second insertion robotic manipulator 610. In a further example, multiple transfer robotic manipulators 602 between the first terminated end 306 of the wire 300 and the second terminated end 308 of the wire 300 are spaced along the upper surface 212 of the tool support structure 214 by a predetermined distance. In an even further example, the predetermined distance includes approximately 30,48 cm (i.e., approximately one foot) to approximately 91,44 cm (i.e., approximately three feet), approximately 45,72 cm (i.e., approximately 1,5 feet) to approximately 76,20 cm (i.e., approximately 2,5 feet), approximately 60,96 cm (i.e., approximately two feet) or any other suitable distance.

In still another example of the method 1400, the picking 1408 of the wire 300 and the placing 1410 of the wire 300 includes picking 2702 (see Fig. 27) the wire 300 between the first terminated end 306 and the second terminated end 308 using a robotic manipulator 218 disposed on the upper surface 212 of the tool support structure 214. At 2704, the wire 300 between the first terminated end 306 and the second terminated end 308 is placed in wire routing supports 514, 522 of a predetermined longitudinal routing lane 516 in the raceway assembly fixture 202 using the robotic manipulator 218. In a further example, the picking 1408 of the wire 300 and the placing 1410 of the wire 300 also include moving 2802 (see Fig. 28) the robotic manipulator 218 on a robotic transfer unit 608, 612 toward the first shuttle 210. The robotic manipulator 218 mounted on the robotic transfer unit 608, 612. The robotic transfer unit 608, 612 disposed on the upper surface 212 of the tool support structure 214. At 2804, the first terminated end 306 of the wire 300 is picked from the first shuttle 210 using the robotic manipulator 218. At 2806, the first terminated end 306 of the wire 300 is placed in a predetermined origination electrical connector 512, 518 in the raceway assembly fixture 202 using the robotic manipulator 218. In an even further example, the picking 1408 of the wire 300 and the placing 1410 of the wire 300 also include moving 2902 (see Fig. 29) the robotic manipulator 218 on the robotic transfer unit 608, 612 toward the second shuttle 216. At 2904, the second terminated end 308 of the wire 300 is picked from the second shuttle 216 using the robotic manipulator 218. At 2906, the second terminated end 308 of the wire 300 is placed in a predetermined destination electrical connector 512, 518 in the raceway assembly fixture 202 using the robotic manipulator 218.

Referring generally to Figs. 1-7 and 30-36, by way of examples, the present disclosure is directed to a method 3000 for assembling an electrical raceway module. Fig. 1 shows an example of a fabrication system for assembling wires 300, raceway assembly fixtures 202 and electrical raceway modules. Fig. 2 shows an example of a wire assembly system 100 for assembling electrical raceway modules. Fig. 3 shows an example of a wire 300. Fig. 4 shows an example of a wire carrier 400 for transporting the wire 300 of Fig. 3. Fig. 5 shows an example of a raceway assembly fixture 202 of the wire assembly system 100 of Fig. 2. Fig. 6 shows another example of a wire assembly system 100 for assembling electrical raceway modules. Fig. 7 shows an example of a wire shuttle subsystem 208 of the wire assembly system 100 of Fig. 6.

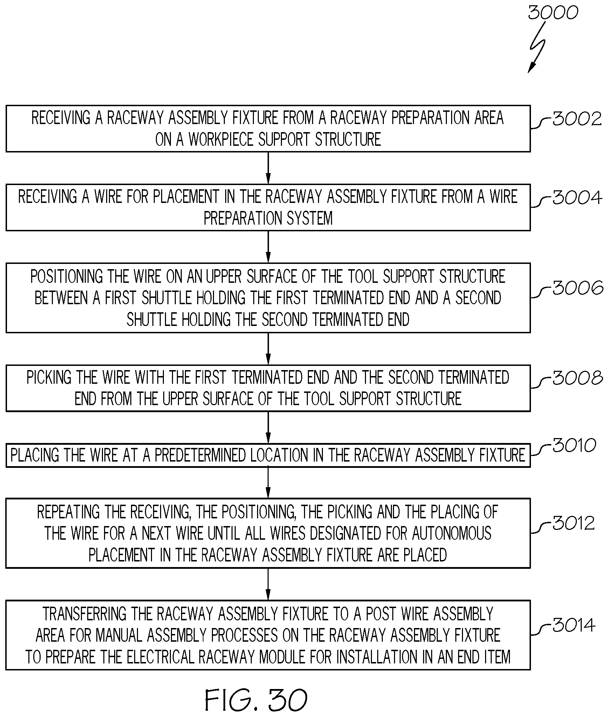

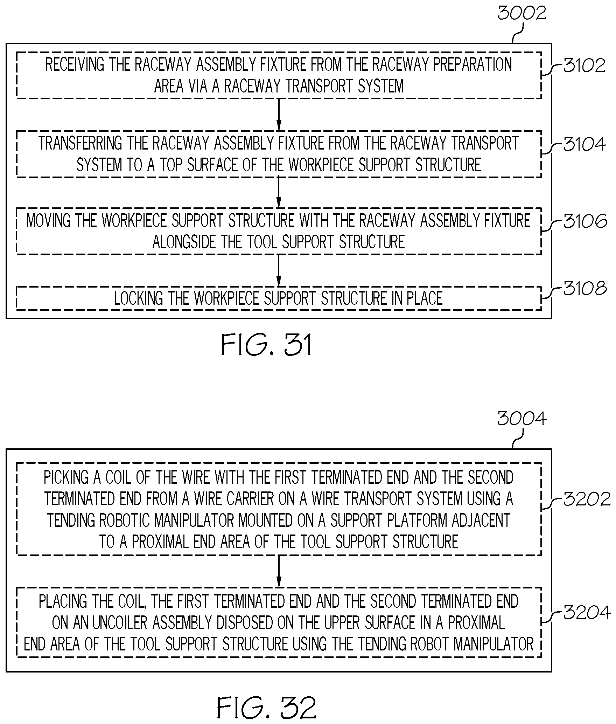

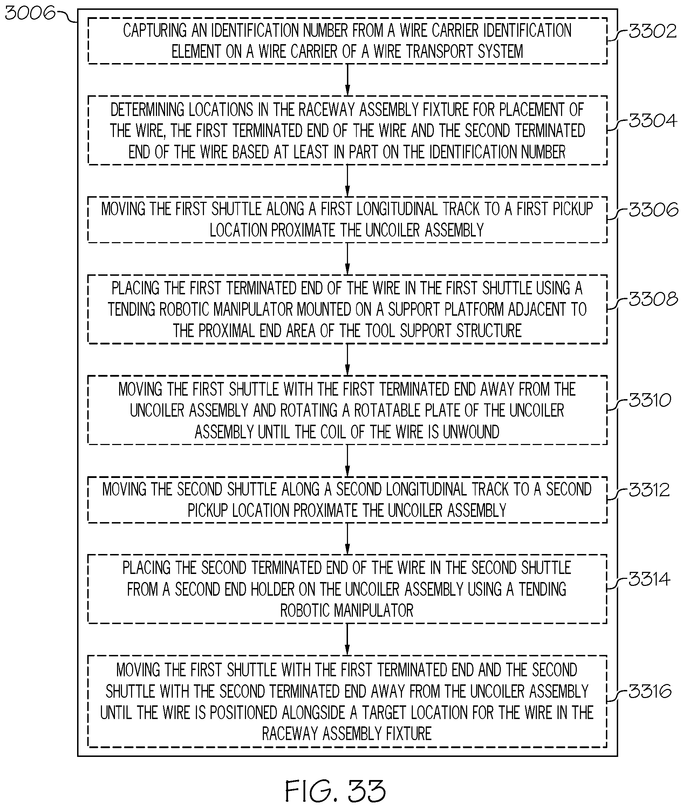

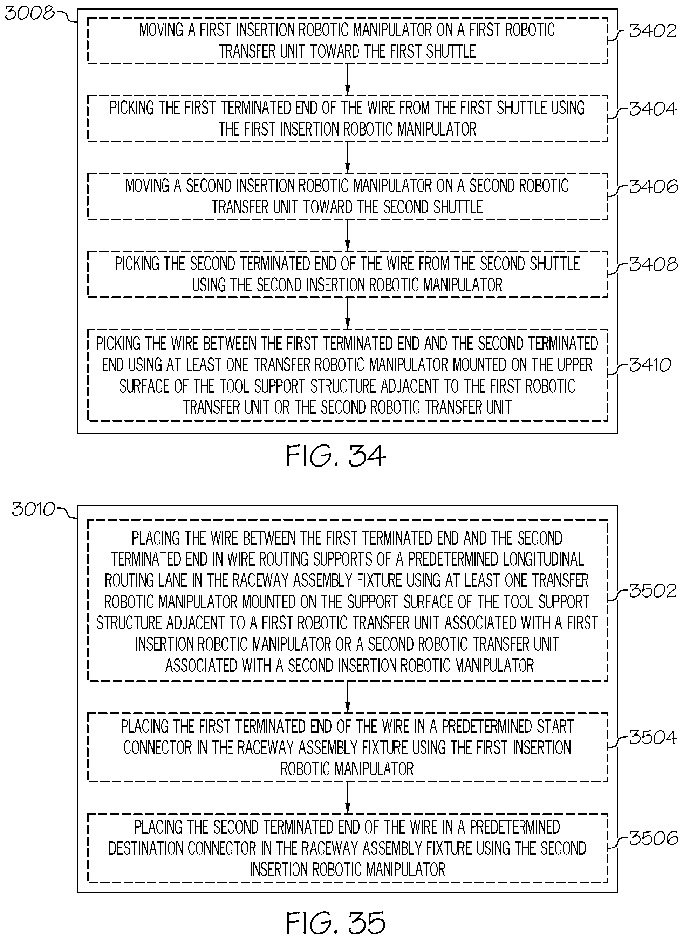

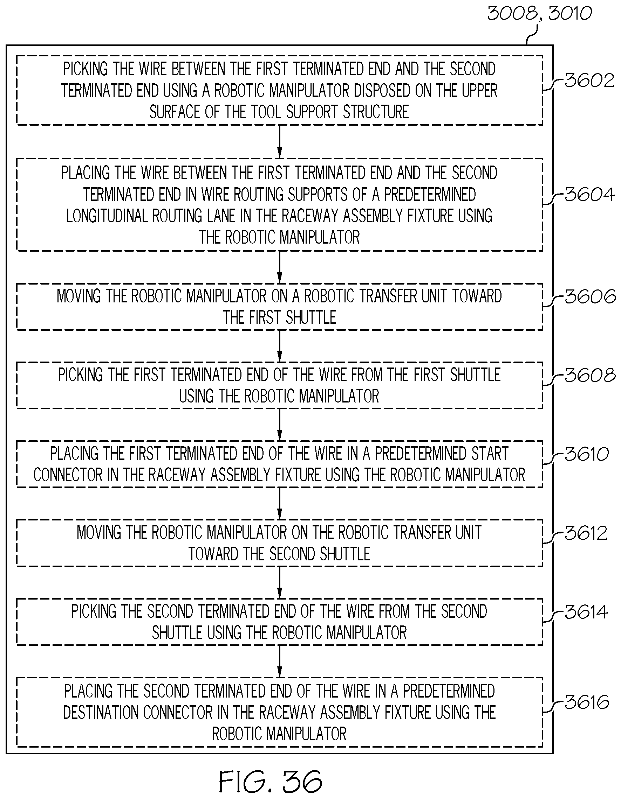

Fig. 30 provides an example of the method 3000 for assembling an electrical raceway module. Fig. 31 provides an example of the receiving 3002 of the raceway assembly fixture 202 in the method 3000 of Fig. 30. Fig. 32 provides an example of the receiving 3004 of the wire 300 in the method 3000 of Fig. 30. Fig. 33 provides an example of the positioning 3006 of the wire 300 in the method 3000 of Fig. 30. Fig. 34 provides an example of the picking 3008 of the wire 300 in the method 3000 of Fig. 30. Fig. 35 provides an example of the placing 3010 of the wire 300 in the method 3000 of Fig. 30. Fig. 36 provides another example of the picking 3008 and the placing 3010 of the wire 300 in the method 3000 of Fig. 30.

With reference again to Figs. 1-7 and 30-36, in one or more examples, a method 3000 (see Fig. 30) for assembling an electrical raceway module includes receiving 3002 a raceway assembly fixture 202 from a raceway preparation area 106 on a workpiece support structure 206. The workpiece support structure 206 is alongside a tool support structure 214. At 3004, a wire 300 is received for placement in the raceway assembly fixture 202 from a wire preparation system 102. The wire 300 includes a first terminated end 306 and a second terminated end 308. At 3006, the wire 300 is positioned on an upper surface 212 of the tool support structure 214 between a first shuttle 210 holding the first terminated end 306 and a second shuttle 216 holding the second terminated end 308. At 3008, the wire 300 with the first terminated end 306 and the second terminated end 308 is picked from the upper surface 212 of the tool support structure 214. At 3010, the wire 300 is placed at a predetermined location in the raceway assembly fixture 202. At 3012, the receiving 3002, 3004, the positioning 3006, the picking 3008 and the placing 3010 of the wire 300 are repeated for a next wire 300 until all wires designated for autonomous placement in the raceway assembly fixture 202 are placed. At 3104, the raceway assembly fixture 202 is transferred to a post wire assembly area 108 for manual assembly processes on the raceway assembly fixture 202 to prepare the electrical raceway module for installation in an end item.

In another example of the method 3000, the receiving 3002 of the raceway assembly fixture 202 includes receiving 3102 (see Fig. 31) the raceway assembly fixture 202 from the raceway preparation area 106 via a raceway transport system. At 3104, the raceway assembly fixture 202 is transferred from the raceway transport system to a top surface 204 of the workpiece support structure 206. At 3106, the workpiece support structure 206 with the raceway assembly fixture 202 is positioned alongside the tool support structure 214. At 3108, the workpiece support structure 206 is locked in place.

In yet another example of the method 3000, the receiving 3004 of the wire 300 includes picking 3202 (see Fig. 32) a coil 302 of the wire 300 with the first terminated end 306 and the second terminated end 308 from a wire carrier 400 on a wire transport system 104 using a tending robotic manipulator 614 mounted on a support platform 616 adjacent to a proximal end area 618 of the tool support structure 214. At 3204, the coil 302, the first terminated end 306 and the second terminated end 308 are placed on an uncoiler assembly 712 disposed on the upper surface 212 at a proximal end area 618 of the tool support structure 214 using the tending robotic manipulator 614.

In still another example of the method 3000, a coil 302 of the wire 300 with the first terminated end 306 and the second terminated end 308 is positioned at an uncoiler assembly 712 on the upper surface 212 at a proximal end area 618 of the tool support structure 214. In this example, the positioning 3006 of the wire 300 includes capturing 3302 (see Fig. 33) an identification number from a wire carrier identification element 408 on a wire carrier 400 of a wire transport system 104. The identification number uniquely identifying the wire carrier 400 in relation to other wire carriers on the wire transport system 104. The identification number correlating to a unique wire number associated with the wire 300 in relation to other wires of the electrical raceway module. At 3304, locations in the raceway assembly fixture 202 are determined for placement of the wire 300, the first terminated end 306 of the wire 300 and the second terminated end 308 of the wire 300 based at least in part on the identification number. At 3306, the first shuttle 210 is moved along a first longitudinal track 706 to a first pickup location proximate the uncoiler assembly 712. At 3308, the first terminated end 306 of the wire 300 is placed in the first shuttle 210 using a tending robotic manipulator 614 mounted on a support platform 616 adjacent to the proximal end area 618 of the tool support structure 214. At 3310, the first shuttle 210 with the first terminated end 306 is moved away from the uncoiler assembly 712 and a rotatable plate 718 of the uncoiler assembly 712 is rotated until the coil 302 of the wire 300 is unwound. At 3312, the second shuttle 216 is moved along a second longitudinal track 710 to a second pickup location proximate the uncoiler assembly 712. At 3314, the second terminated end 308 of the wire 300 is placed in the second shuttle 216 from a second end holder 722 on the uncoiler assembly 712 using a tending robotic manipulator 614. At 3316, the first shuttle 210 with the first terminated end 306 and the second shuttle 216 with the second terminated end 308 are moved away from the uncoiler assembly 712 until the wire 300 is positioned alongside a target location for the wire 300 in the raceway assembly fixture 202.

In still yet another example of the method 3000, the picking 3008 of the wire 300 includes moving 3402 (see Fig. 34) a first insertion robotic manipulator 606 on a first robotic transfer unit 608 toward the first shuttle 210. The first insertion robotic manipulator 606 is mounted on the first robotic transfer unit 608. The first robotic transfer unit 608 is disposed on the upper surface 212 of the tool support structure 214. At 3404, the first terminated end 306 of the wire 300 is picked from the first shuttle 210 using the first insertion robotic manipulator 606. At 3406, a second insertion robotic manipulator 610 on a second robotic transfer unit 612 is moved toward the second shuttle 216. The second insertion robotic manipulator 610 is mounted on the second robotic transfer unit 612. The second robotic transfer unit 612 is disposed on the upper surface 212 of the tool support structure 214 adjacent to the first robotic transfer unit 608. At 3408, the second terminated end 308 of the wire 300 is picked from the second shuttle 216 using the second insertion robotic manipulator 610. At 3410, the wire 300 between the first terminated end 306 and the second terminated end 308 is picked using at least one transfer robotic manipulator 602 mounted on the upper surface 212 of the tool support structure 214 adjacent to the first robotic transfer unit 608 or the second robotic transfer unit 612.

In another example of the method 3000, the placing 3010 of the wire 300 includes placing 3502 (see Fig. 35) the wire 300 between the first terminated end 306 and the second terminated end 308 in wire routing supports 514, 522 of a predetermined longitudinal routing lane 516 in the raceway assembly fixture 202 using at least one transfer robotic manipulator 602 mounted on the upper surface 212 of the tool support structure 214 adjacent to a first robotic transfer unit 608 associated with a first insertion robotic manipulator 606 or a second robotic transfer unit 612 associated with a second insertion robotic manipulator 610. The first insertion robotic manipulator 606 mounted on the first robotic transfer unit 608. The first robotic transfer unit 608 is disposed on the upper surface 212 of the tool support structure 214. The second insertion robotic manipulator 610 is mounted on the second robotic transfer unit 612. The second robotic transfer unit 612 is disposed on the upper surface 212 of the tool support structure 214. At 3504, the first terminated end 306 of the wire 300 is placed in a predetermined origination electrical connector 512, 518 in the raceway assembly fixture 202 using the first insertion robotic manipulator 606. At 3506, the second terminated end 308 of the wire 300 is placed in a predetermined destination electrical connector 512, 518 in the raceway assembly fixture 202 using the second insertion robotic manipulator 610.

In yet another example of the method 3000, the picking 3008 of the wire 300 and the placing 3010 of the wire 300 includes picking 3602 (see Fig. 36) the wire 300 between the first terminated end 306 and the second terminated end 308 using a robotic manipulator 218 disposed on the upper surface 212 of the tool support structure 214. At 3604, the wire 300 is placed between the first terminated end 306 and the second terminated end 308 in wire routing supports 514, 522 of a predetermined longitudinal routing lane 516 in the raceway assembly fixture 202 using the robotic manipulator 218. At 3606, the robotic manipulator 218 on a robotic transfer unit 608, 612 is moved toward the first shuttle 210. The robotic manipulator 218 is mounted on the robotic transfer unit 608, 612. The robotic transfer unit 608, 612 is disposed on the upper surface 212 of the tool support structure 214. At 3608, the first terminated end 306 of the wire 300 is picked from the first shuttle 210 using the robotic manipulator 218. At 3610, the first terminated end 306 of the wire 300 is placed in a predetermined origination electrical connector 512 in the raceway assembly fixture 202 using the robotic manipulator 218. At 3612, the robotic manipulator 218 on the robotic transfer unit 608, 612 is moved toward the second shuttle 216. At 3614, the second terminated end 308 of the wire 300 is picked from the second shuttle 216 using the robotic manipulator 218. At 3616, the second terminated end 308 of the wire 300 is placed in a predetermined destination electrical connector 512 in the raceway assembly fixture 202 using the robotic manipulator 218.

Examples of wire assembly systems 100 and methods 1400, 1500, 3000 for assembling electrical raceway modules may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result. As for the numeric values, where a certain quantity is indicated both in SI system and in United States customary units and doubts arise as to the correct numeric value, the United States customary units shall prevail.

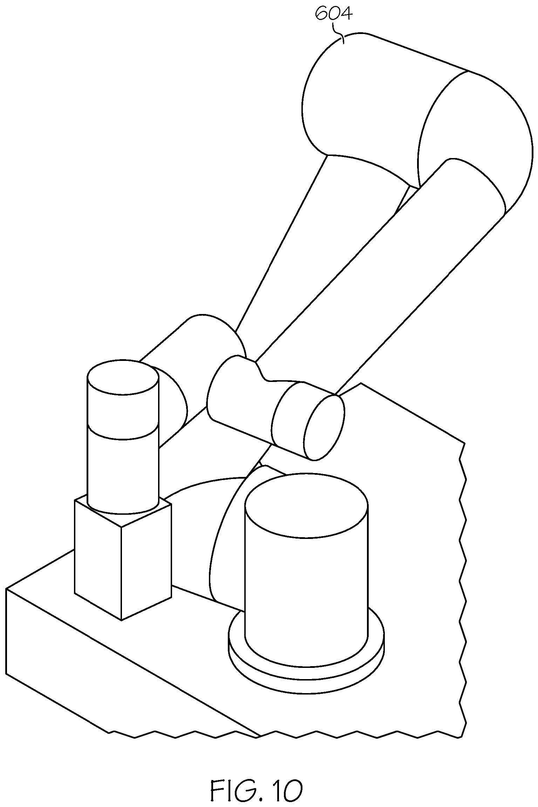

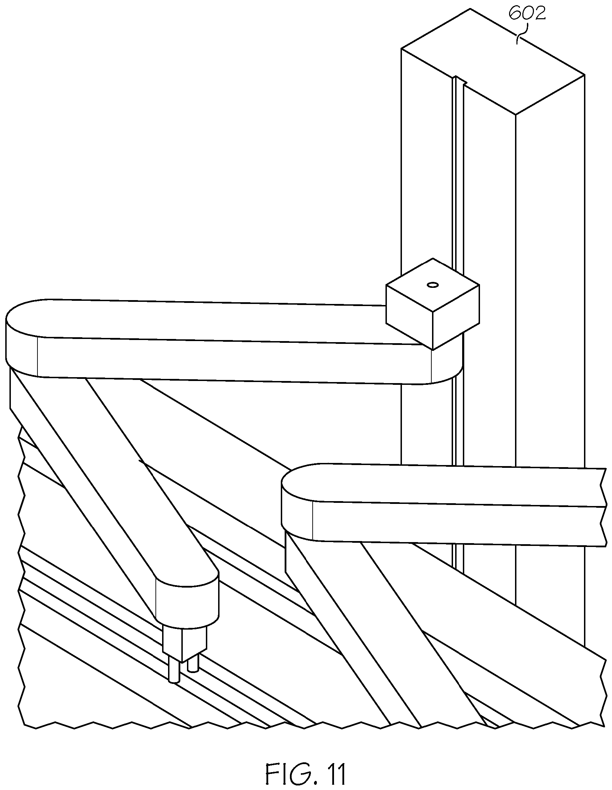

In Figs. 1-7, 8A-B, 9-13 and 21, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-7, 8A-B, 9-13 and 21, referred to above, need be included in every example and not all elements, features and/or components described herein are necessarily depicted in each illustrative example. Accordingly, some of the elements, features and/or components described and illustrated in Figs. 1-7, 8A-B, 9-13 and 21 may be combined in various ways without the need to include other features described and illustrated in Figs. 1-7, 8A-B, 9-13 and 21, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-7, 8A-B, 9-13 and 21, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-7, 8A-B, 9-13 and 21 and such elements, features and/or components may not be discussed in detail herein with reference to each of Figs. 1-7, 8A-B, 9-13 and 21. Similarly, all elements, features and/or components may not be labeled in each of Figs. 1-7, 8A-B, 9-13 and 21, but reference numerals associated therewith may be utilized herein for consistency. With reference to Figs. 6 and 8A, the item labeled with numeral 400 indicates the position of the wire carrier within the overall system. Furthermore, with reference to Fig. 8A, the label "Fig. 12" aims to characterize the item 614 as being made in accordance with the example tending robot manipulator illustrated in Fig. 12. The tending robot manipulator is configured to pick up coil 312 of wire 300. In addition, with reference to Figs. 8A and 8B, the label "Fig. 13" aims to characterize the item 604 as being made in accordance with the example insertion robotic manipulator illustrated in Fig. 13

In Figs. 14-36, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 14-36 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

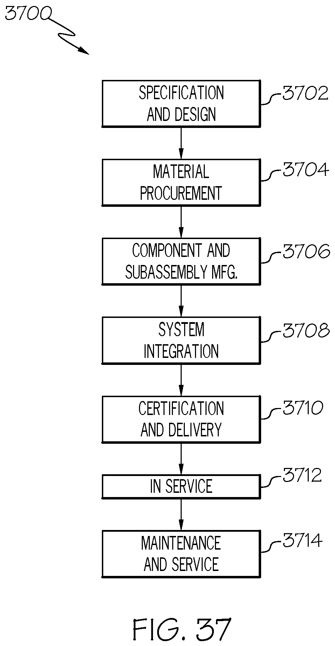

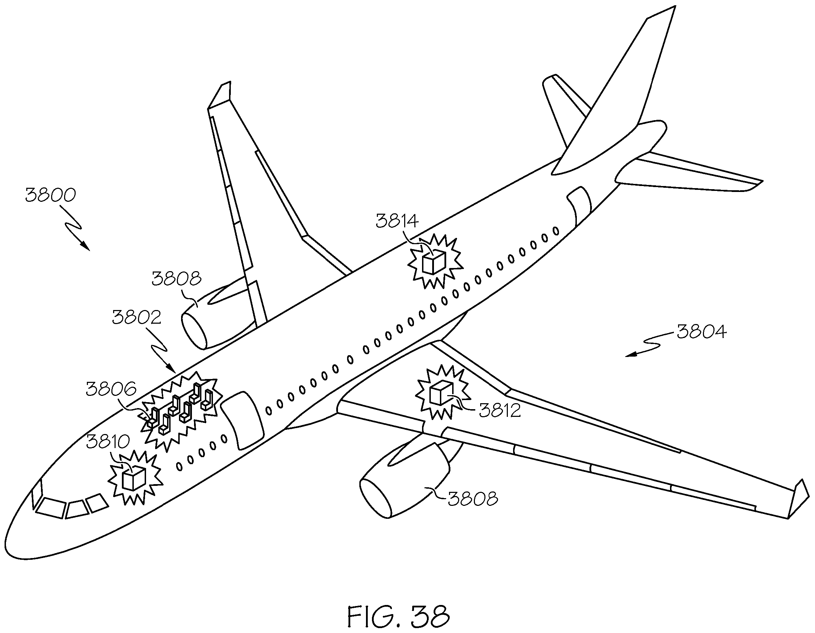

Examples of the subject matter disclosed herein may be described in the context of aircraft manufacturing and service method 3700 as shown in Fig. 37 and aircraft 3800 as shown in Fig. 38. In one or more examples, the disclosed wire assembly systems 100 and methods 1400, 1500, 3000 for assembling electrical raceway modules may be used in aircraft manufacturing. During pre-production, the service method 3700 may include specification and design (block 3702) of aircraft 3800 and material procurement (block 3704). During production, component and subassembly manufacturing (block 3706) and system integration (block 3708) of aircraft 3800 may take place. Thereafter, aircraft 3800 may go through certification and delivery (block 3710) to be placed in service (block 3712). While in service, aircraft 3800 may be scheduled for routine maintenance and service (block 3714). Routine maintenance and service may include modification, reconfiguration, refurbishment, etc. of one or more systems of aircraft 3800.

Each of the processes of the service method 3700 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 38, aircraft 3800 produced by the service method 3700 may include airframe 3802 with a plurality of high-level systems 3804 and interior 3806. Examples of high-level systems 3804 include one or more of propulsion system 3808, electrical system 3810, hydraulic system 3812 and environmental system 3814. Any number of other systems may be included. Although an aerospace example is shown, the principles disclosed herein may be applied to other industries, such as the automotive industry. Accordingly, in addition to aircraft 3800, the principles disclosed herein may apply to other vehicles, e.g., land vehicles, marine vehicles, space vehicles, etc.

The disclosed wire assembly systems 100 and methods 1400, 1500, 3000 for assembling electrical raceway modules may be employed during any one or more of the stages of the manufacturing and service method 3700. For example, components or subassemblies corresponding to component and subassembly manufacturing (block 3706) may be fabricated or manufactured in a manner similar to components or subassemblies produced while aircraft 3800 is in service (block 3712). Also, one or more examples of the system(s), method(s), or combination thereof may be utilized during production stages (block 3706 and block 3708), for example, by substantially expediting assembly of or reducing the cost of aircraft 3800. Similarly, one or more examples of the system or method realizations, or a combination thereof, may be utilized, for example and without limitation, while aircraft 3800 is in service (block 3712) and/or during maintenance and service (block 3714).

The described features, advantages and characteristics of one example may be combined in any suitable manner in one or more other examples. The present application is limited only by the scope of the claims. In this aspect, while the scope of protection is determined by the appended claims, realizations of the present disclosure can be made in many ways including, but not limited to, those according to the following Clauses:
Clause 1 - A wire assembly system 100 for assembling an electrical raceway module, comprising: a raceway assembly fixture 202 disposed on a top surface 204 of a workpiece support structure 206; a wire shuttle subsystem 208 comprising a first shuttle 210 disposed on an upper surface 212 of a tool support structure 214 and a second shuttle 216 disposed on the upper surface 212; at least one robotic manipulator 218 disposed on the upper surface 212 of the tool support structure 214; and a system controller 220 in operative communication with the wire shuttle subsystem 208 and the at least one robotic manipulator 218 to control placement of a wire 300 from the first shuttle 210 and the second shuttle 216 to the raceway assembly fixture 202.
Clause 2 - The wire assembly system of Clause 1 wherein the electrical raceway module is configured for installation in an end item as a modular component of an electrical raceway architecture for the end item.
Clause 3 - The wire assembly system of Clause 2 wherein the end item comprises at least one of an aircraft, a rotorcraft, a bus, a passenger transport vehicle, a military transport vehicle, an operational military vehicle, a power plant, an unmanned air vehicle, a ship, a ferry, a cruise ship, a military ship, a commercial building, and a residential building.
Clause 4 - The wire assembly system of Clause 1 wherein the electrical raceway module is at least one of approximately 10,16 cm wide to approximately 91,44 wide, approximately 20,32 cm wide to approximately 60,96 cm wide, and approximately 35,56 cm wide to approximately 45,72 cm wide.
Clause 5 - The wire assembly system of Clause 1 wherein the electrical raceway module is at least one of approximately 60,96 cm long to approximately 30,48 m long, approximately 3,05 m long to approximately 24,38 m long, approximately 6,10 m feet long to approximately 18,29 m long, approximately 9,14 m long to approximately 15,24 m long and approximately 12,19 m long.
Clause 6 - The wire assembly system of Clause 1, the workpiece support structure 206 comprising a conveyor table.
Clause 7 - The wire assembly system of Clause 6 wherein the conveyor table comprises at least one of a mobile cart, a table with rollers on a top side, and a support structure with a conveyor belt.
Clause 8 - The wire assembly system of Clause 1 wherein the at least one robotic manipulator 218 comprises one or more of at least one robotic arm, at least one 4-axis robotic arm, at least one 6-axis robotic arm, at least one 7-axis robotic arm, at least one selective compliance articulated robotic arm, at least one collaborative robot, at least one electro-mechanical manipulator, at least one automated mechanical manipulator, at least one semi-automated mechanical manipulator, at least one fixed-actuator tending robot, and at least one semi-manual use robot.
Clause 9 - The wire assembly system of Clause 1 wherein the wire assembly system 100 is configured to receive the wire 300 on a wire carrier 400 from a wire preparation system 102 via a wire transport system 104.
Clause 10 - The wire assembly system of Clause 9 wherein the wire carrier 400 comprises at least one coil holder 402, a first end clamp 404, a second end clamp 406, and a wire carrier identification element 408.
Clause 11 - The wire assembly system of Clause 10 wherein the wire carrier identification element 408 comprises at least one of a serial number, a barcode, a machine-readable code, a quick-response code, a glyph code, a radio frequency identification tag, and a radio frequency identification label.
Clause 12 - The wire assembly system of Clause 9 wherein, as received, the wire 300 comprises a coil 302 with a breakout point 304 at which a first terminated end 306 of the wire 300 and a second terminated end 308 of the wire 300 break out from the coil 302, the wire 300 further comprising a first wire marker 310 proximate the first terminated end 306 and a second wire marker 312 proximate the second terminated end 308.
Clause 13 - The wire assembly system of Clause 9 wherein the wire 300 comprises at least one of a single conductor, a twisted pair of conductors, a multiconductor cable, a shielded cable, an unjacketed cable, a coaxial cable, a matched-impedance cable, and a fiber optic cable.
Clause 14 - The wire assembly system of Clause 1, the raceway assembly fixture 202 comprising: a raceway framework 502 comprising longitudinal side plates 504, lateral end plates 506, longitudinal support members 508 between the lateral end plates 506 and lateral support members 510 between the longitudinal side plates 504; electrical connectors 512 disposed proximate the lateral end plates 506; and wire routing supports 514 mounted on the lateral support members 510 to define longitudinal routing lanes 516.
Clause 15 - The wire assembly system of Clause 14, the electrical connectors 512 comprising at least one of a modular connector and a standard connector.
Clause 16 - The wire assembly system of Clause 14, the raceway assembly fixture 202 further comprising: at least one additional electrical connector 518 disposed proximate at least one of the longitudinal side plates 504; at least one printed wiring board 520 mounted on at least one of one or more of the longitudinal side plates 504, one or more of the lateral end plates 506, one or more of the longitudinal support members 508, and one or more of the lateral support members 510; and breakout wiring supports 522 mounted on the lateral support members 510 to define lateral routing lanes 524 breaking out from one or more of the longitudinal routing lanes 516.
Clause 17 - The wire assembly system of Clause 1 wherein the first shuttle 210 is configured to receive and temporarily retain a first terminated end 306 of a wire 300 and the second shuttle 216 is configured to receive and temporarily retain a second terminated end 308 of the wire 300, and wherein the system controller 220 and the wire shuttle subsystem 208 are configured to position the first shuttle 210 and the second shuttle 216 to extend the wire 300 longitudinally on the upper surface 212 of the tool support structure 214.
Clause 18 - The wire assembly system of Clause 17 wherein the system controller 220, the wire shuttle subsystem 208, and the at least one robotic manipulator 218 are configured to place the wire 300 with the first terminated end 306 and the second terminated end 308 at a predetermined location in the raceway assembly fixture 202.
Clause 19 - The wire assembly system of Clause 17, the at least one robotic manipulator 218 comprising: at least one transfer robotic manipulator 602 mounted on the upper surface 212 of the tool support structure 214, the at least one transfer robotic manipulator 602 configured to pick the wire 300 from between the first shuttle 210 and the second shuttle 216 and place the wire 300 in one or more wire routing support 514 at predetermined locations in the raceway assembly fixture 202.
Clause 20 - The wire assembly system of Clause 19 wherein the at least one transfer robotic manipulator 602 comprises one or more of at least one robotic arm, at least one selective compliance articulated robotic arm, and at least one collaborative robot.
Clause 21 - The wire assembly system of Clause 19 wherein the at least one transfer robotic manipulator 602 comprises a plurality of transfer robotic manipulators 602 longitudinally spaced apart along the upper surface 212 of the tool support structure 214.
Clause 22 - The wire assembly system of Clause 21 wherein the plurality of transfer robotic manipulators 602 are spaced apart by at least one of approximately 30,48 cm to approximately 60,96 cm, approximately 60,96 cm to approximately 91,44 cm and approximately 91,44 cm to approximately 121,92 cm.
Clause 23 - The wire assembly system of Clause 17, the at least one robotic manipulator 218 comprising: at least one insertion robotic manipulator 604 disposed on the upper surface 212 of the tool support structure 214, the at least one insertion robotic manipulator 604 configured to pick the first terminated end 306 of the wire 300 from the first shuttle 210 and to insert the first terminated end 306 in a predetermined origination electrical connector 512 at a first predetermined location in the raceway assembly fixture 202.
Clause 24 - The wire assembly system of Clause 23 wherein the at least one insertion robotic manipulator 604 comprises one or more of at least one robotic arm, at least one 6-axis robotic arm, at least one 7-axis robotic arm, and at least one collaborative robot.
Clause 25 - The wire assembly system of Clause 23 wherein the at least one insertion robotic manipulator 604 is configured to pick the second terminated end 308 of the wire 300 from the second shuttle 216 and to insert the second terminated end 308 in predetermined destination electrical connector 512 at a second predetermined location in the raceway assembly fixture 202.
Clause 26 - The wire assembly system of Clause 17, the at least one robotic manipulator 218 comprising: a first insertion robotic manipulator 606 mounted on a first robotic transfer unit 608 disposed on the upper surface 212 of the tool support structure 214 and configured to translate the first insertion robotic manipulator 606 a length of the raceway assembly fixture 202, the first insertion robotic manipulator 606, in conjunction with the first robotic transfer unit 608, configured to pick the first terminated end 306 of the wire 300 from the first shuttle 210 and to insert the first terminated end 306 in a predetermined origination electrical connector 512 at a first predetermined location in the raceway assembly fixture 202; and a second insertion robotic manipulator 610 mounted on a second robotic transfer unit 612 disposed on the upper surface 212 adjacent to the first robotic transfer unit 608 and configured to translate the second insertion robotic manipulator 610 the length of the raceway assembly fixture 202, the second insertion robotic manipulator 610, in conjunction with the second robotic transfer unit 612, configured to pick the second terminated end 308 of the wire 300 from the second shuttle 216 and to insert the second terminated end 308 in a predetermined destination electrical connector 512 at a second predetermined location in the raceway assembly fixture 202.
Clause 27 - The wire assembly system of Clause 1, the wire shuttle subsystem 208 further comprising: a longitudinal trough 702 disposed on the upper surface 212 of the tool support structure 214 and extending alongside the raceway assembly fixture 202; a first transport assembly 704 mechanically connected to the first shuttle 210 to position the first shuttle 210 along a first longitudinal track 706 of the longitudinal trough 702; a second transport assembly 708 mechanically connected to the second shuttle 216 to position the second shuttle 216 along a second longitudinal track 710 of the longitudinal trough 702; an uncoiler assembly 712 disposed on the upper surface 212 of the tool support structure 214 and configured to hold a coil 302 of the wire 300, a first terminated end 306 of the wire 300 and a second terminated end 308 of the wire 300; an image sensor 714 proximate the uncoiler assembly 712 and configured to selectively capture images of the first terminated end 306 and the second terminated end 308 and images showing a status of the coil 302 on the uncoiler assembly 712; a wire carrier identification detector 715 proximate a wire carrier 400 on a wire transport system 104, the wire carrier 400 configured to transport the wire 300 from a wire preparation system 102 to the wire assembly system 100, the wire carrier identification detector 715 configured to selectively capture an identification number from a wire carrier identification element 408 on the wire carrier 400; and a control assembly 716 in operative communication with the first transport assembly 704, the second transport assembly 708, the uncoiler assembly 712, the image sensor 714, the wire carrier identification detector 715 and the system controller 220 to control transfer of the first terminated end 306 from the uncoiler assembly 712 to the first shuttle 210, movement of the first shuttle 210 along the first longitudinal track 706, unwinding of the coil 302 from the uncoiler assembly 712, placement of the second terminated end 308 from the uncoiler assembly 712 to the second shuttle 216 and movement of the second shuttle 216 along the second longitudinal track 710.
Clause 28 - The wire assembly system of Clause 27, the first transport assembly 704 comprising at least one of a stepper motor, a DC motor, an encoder device, a position sensor, a belt drive assembly, a screw-drive assembly and a chain drive assembly.
Clause 29 - The wire assembly system of Clause 27, the second transport assembly 708 comprising at least one of a stepper motor, a DC motor, an encoder device, a position sensor, a belt drive assembly, a screw-drive assembly and a chain drive assembly.
Clause 30 - The wire assembly system of Clause 27, the image sensor 714 comprising at least one of a digital camera, a charge-coupled device, an active-pixel device, an optical scanner and a laser scanner.
Clause 31 - The wire assembly system of Clause 27, the wire carrier identification detector 715 comprising at least one of a digital camera, a charge-coupled device, an active-pixel device, an optical scanner, a laser scanner, a radio frequency identification reader and a radio frequency identification transponder.
Clause 32 - The wire assembly system of Clause 27, the uncoiler assembly 712 comprising: a rotatable plate 718 configured to temporarily hold the coil 302 of the wire 300 and to unwind the wire 300 in response to tension on the first terminated end 306 in conjunction with movement of the first shuttle 210 along the first longitudinal track 706 of the wire shuttle subsystem 208; a first end holder 720 disposed proximate the rotatable plate 718 and configured to temporarily hold the first terminated end 306 of the wire 300; and a second end holder 722 mounted on the rotatable plate 718 and configured to hold the second terminated end 308 of the wire 300.
Clause 33 - The wire assembly system of Clause 32 wherein the first end holder 720 comprises the first shuttle 210 when positioned on the first longitudinal track 706 of the longitudinal trough 702 proximate the rotatable plate 718.
Clause 34 - The wire assembly system of Clause 32, further comprising: a tending robotic manipulator 614 mounted on a support platform 616 adjacent to a proximal end area 618 of the tool support structure 214, the tending robotic manipulator 614 configured to pick the coil 302 of the wire 300, the first terminated end 306 and the second terminated end 308 from a wire carrier 400 on a wire transport system 104 and to place the coil 302 on the rotatable plate 718 of the uncoiler assembly 712, the first terminated end 306 on the first end holder 720 and the second terminated end 308 on the second end holder 722.
Clause 35 - The wire assembly system of Clause 34 wherein the tending robotic manipulator 614 comprises at least one of a robotic arm, a 6-axis robotic arm, a collaborative robot, an electro-mechanical manipulator, an automated mechanical manipulator, a semi-automated mechanical manipulator, a fixed-actuator tending robot and a semi-manual use robot.
Clause 36 - The wire assembly system of Clause 34 wherein the system controller 220 and the tending robotic manipulator 614 are configured to pick the first terminated end 306 of the wire 300 from the first end holder 720 and place the first terminated end 306 on the first shuttle 210, and wherein the system controller 220 and the tending robotic manipulator 614 are configured to pick the second terminated end 308 of the wire 300 from the second end holder 722 and place the second terminated end 308 on the second shuttle 216 after the system controller 220 detects that the wire 300 is unwound from the rotatable plate 718.
Clause 37 - A method 1400 for assembling an electrical raceway module, the method comprising: receiving 1402 a raceway assembly fixture 202 from a raceway preparation area 106 on a workpiece support structure 206, the workpiece support structure 206 alongside a tool support structure 214; receiving 1404 a wire 300 for placement in the raceway assembly fixture 202 from a wire preparation system 102, the wire 300 comprising a first terminated end 306 and a second terminated end 308; positioning 1406 the wire 300 on an upper surface 212 of the tool support structure 214 between a first shuttle 210 holding the first terminated end 306 and a second shuttle 216 holding the second terminated end 308; picking 1408 the wire 300 with the first terminated end 306 and the second terminated end 308 from the upper surface 212 of the tool support structure 214, the first shuttle 210 and the second shuttle 216; and placing 1410 the wire 300 at a predetermined location in the raceway assembly fixture 202.
Clause 38 - The method of Clause 37 wherein the electrical raceway module is configured for installation in an end item as a modular component of an electrical raceway architecture for the end item.
Clause 39 - The method of Clause 38 wherein the end item comprises at least one of an aircraft, a rotorcraft, an unmanned air vehicle, a bus, a passenger transport vehicle, a military transport vehicle, an operational military vehicle, a passenger ship, a cargo ship, a military ship, a commercial building and a residential building.
Clause 40 - The method of Clause 37 wherein the electrical raceway module is at least one of approximately 10,16 cm wide to approximately 91,44 cm wide, approximately 20,32 cm wide to approximately 60,96 cm wide and approximately 35,56 cm wide to approximately 45,72 cm wide.
Clause 41 - The method of Clause 37 wherein the electrical raceway module is at least one of approximately 60,96 cm long to approximately 30,48 m long, approximately 3,05 m long to approximately 24,38 m, approximately 6,10 m long to approximately 18,29 m long, approximately 9,14 m long to approximately 15,24 m long and approximately 12,19 m long. Clause 42 - The method of Clause 37, the workpiece support structure 206 comprising a conveyor table.
Clause 43 - The method of Clause 42 wherein the conveyor table comprises at least one a mobile cart, a table with rollers on a top side and a support structure with a conveyor belt.
Clause 44 - The method of Clause 37 wherein the method is implemented in a wire assembly system 100 configured to receive the wire 300 on a wire carrier 400 from a wire preparation system 102 via a wire transport system 104.
Clause 45 - The method of Clause 44 wherein, as received, the wire 300 comprises a coil 302 with a breakout point 304 at which a first terminated end 306 of the wire 300 and a second terminated end 308 of the wire 300 break out from the coil 302, the wire 300 further comprising a first wire marker 310 proximate the first terminated end 306 and a second wire marker 312 proximate the second terminated end 308.
Clause 46 - The method of Clause 44 wherein the wire 300 comprises at least one of a single conductor, a twisted pair of conductors, a multiconductor cable, a shielded cable, an unjacketed cable, a coaxial cable, a matched-impedance cable and a fiber optic cable.
Clause 47 - The method 1500 of Clause 37, further comprising: repeating 1502 the receiving 1402, 1404, the positioning 1406, the picking 1408 and the placing 1410 of the wire 300 for a next wire 300 until all wires designated for autonomous placement in the raceway assembly fixture 202 are placed.
Clause 48 - The method of Clause 47, further comprising: transferring 1504 the raceway assembly fixture 202 to a post wire assembly area 108 for manual assembly processes on the raceway assembly fixture 202 to prepare the electrical raceway module for installation in an end item.
Clause 49 - The method 1400 of Clause 37, the receiving 1402 of the raceway assembly fixture 202 comprising: receiving 1602 the raceway assembly fixture 202 from the raceway preparation area 106 via a raceway transport system; transferring 1604 the raceway assembly fixture 202 from the raceway transport system to a top surface 204 of the workpiece support structure 206; moving 1606 the workpiece support structure 206 with the raceway assembly fixture 202 alongside the tool support structure 214; and locking 1608 the workpiece support structure 206 in place.
Clause 50 - The method of Clause 37, the receiving 1402 of the raceway assembly fixture 202 comprising: transporting 1702 the raceway assembly fixture 202 from the raceway preparation area 106 on the workpiece support structure 206; moving 1704 the workpiece support structure 206 with the raceway assembly fixture 202 alongside the tool support structure 214; and locking 1706 the workpiece support structure 206 in place.
Clause 51 - The method of Clause 37, the receiving 1404 of the wire 300 comprising: picking 1802 a coil 302 of the wire 300 with the first terminated end 306 and the second terminated end 308 from a wire carrier 400 on a wire transport system 104 using a tending robotic manipulator 614 mounted on a support platform 616 adjacent to a proximal end area 618 of the tool support structure 214; and placing 1804 the coil 302, the first terminated end 306 and the second terminated end 308 on an uncoiler assembly 712 disposed on the upper surface 212 at a proximal end area 618 of the tool support structure 214 using the tending robotic manipulator 614.
Clause 52 - The method of Clause 51, the picking 1802 of the coil 302 comprising: picking 1902 the coil 302 of the wire 300 from at least one coil holder 402 of the wire carrier 400 using at least one first retaining device 2102 of an end effector 2100 attached to the tending robotic manipulator 614; picking 1904 the first terminated end 306 of the wire 300 from a first end clamp 404 of the wire carrier 400 using a second retaining device 2104 of the end effector 2100; and picking 1906 the second terminated end 308 of the wire 300 from a second end clamp 406 of the wire carrier 400 using a third retaining device 2106 of the end effector 2100.
Clause 53 - The method of Clause 51, the placing 1804 of the coil 302 comprising: placing 2002 the coil 302 of the wire 300 on a rotatable plate 718 of the uncoiler assembly 712 from at least one first retaining device 2102 of an end effector 2100 attached to the tending robotic manipulator 614; placing 2004 the first terminated end 306 of the wire 300 on a first end holder 720 of the uncoiler assembly 712 from a second retaining device 2104 of the end effector 2100; and placing 2006 the second terminated end 308 of the wire 300 on a second end holder 722 of the uncoiler assembly 712 from a third retaining device 2106 of the end effector 2100.
Clause 54 - The method of Clause 53 wherein the first end holder 720 comprises the first shuttle 210 when positioned proximate the rotatable plate 718.
Clause 55 - The method of Clause 37 wherein a coil 302 of the wire 300 with the first terminated end 306 and the second terminated end 308 is positioned at an uncoiler assembly 712 on the upper surface 212 at a proximal end area 618 of the tool support structure 214, the positioning 1406 of the wire 300 comprising: capturing 2202 an identification number from a wire carrier identification element 408 on a wire carrier 400 of a wire transport system 104, the identification number uniquely identifying the wire carrier 400 in relation to other wire carriers on the wire transport system 104, the identification number correlating to a unique wire number associated with the wire 300 in relation to other wires of the electrical raceway module; determining 2204 locations in the raceway assembly fixture 202 for placement of the wire 300, the first terminated end 306 of the wire 300 and the second terminated end 308 of the wire 300 based at least in part on the identification number; moving 2206 the first shuttle 210 along a first longitudinal track 706 to a first pickup location proximate the uncoiler assembly 712; placing 2208 the first terminated end 306 of the wire 300 in the first shuttle 210 using a tending robotic manipulator 614 mounted on a support platform 616 adjacent to the proximal end area 618 of the tool support structure 214; moving 2210 the first shuttle 210 with the first terminated end 306 away from the uncoiler assembly 712 and rotating a rotatable plate 718 of the uncoiler assembly 712 until the coil 302 of the wire 300 is unwound; moving 2212 the second shuttle 216 along a second longitudinal track 710 to a second pickup location proximate the uncoiler assembly 712; placing 2214 the second terminated end 308 of the wire 300 in the second shuttle 216 from a second end holder 722 on the uncoiler assembly 712 using a tending robotic manipulator 614; and moving 2216 the first shuttle 210 with the first terminated end 306 and the second shuttle 216 with the second terminated end 308 away from the uncoiler assembly 712 until the wire 300 is positioned alongside a target location for the wire 300 in the raceway assembly fixture 202.
Clause 56 - The method of Clause 55, the moving 2210 of the first shuttle 210 and the rotating of the rotatable plate 718 comprising: capturing 2302 a series of visual images of the rotatable plate 718 while the coil 302 of wire 300 is being unwound; determining 2304 the coil 302 of the wire 300 is unwound from the rotatable plate 718 based at least in part on the series of visual images; and stopping 2306 the moving 2210 of the first shuttle 210 and the rotating of the rotatable plate 718 once the coil 302 is unwound.
Clause 57 - The method of Clause 55 wherein the first shuttle 210 comprises a first force sensor 724 and the second shuttle 216 comprises a second force sensor 726, the moving 2216 of the first shuttle 210 and the moving of the second shuttle 216 comprising: stopping 2402 the moving 2216 of the first shuttle 210 and the moving of the second shuttle 216 after the wire 300 is positioned alongside the target location for the wire 300; slowly moving 2404 the first shuttle 210 away from the target location for the wire 300; slowly moving 2406 the second shuttle 216 away from the target location for the wire 300; stopping 2408 opposing movement of the first shuttle 210 and the second shuttle 216 after at least one of the first force sensor 724 and the second force sensor 726 detects a tension on the wire 300 that exceeds a predetermined tension threshold; and retracting 2410 the first shuttle 210 and the second shuttle 216 a predetermined amount to remove tension and relatively center the first terminated end 306 of the wire 300 and the second terminated end 308 of the wire 300 in relation to the target location for the wire 300.
Clause 58 - The method of Clause 57 wherein the predetermined tension threshold comprises at least one of approximately one pound tension to approximately five pounds tension, approximately two pounds tension to approximately four pounds tension and approximately three pounds tension.
Clause 59 - The method of Clause 57 wherein the predetermined amount of retraction toward the target location for the wire 300 comprises at least one of approximately 0.1 percent to approximately 0.7 percent of a length of the wire 300, approximately 0.2 percent to approximately 0.6 percent of the length of the wire 300, approximately 0.3 percent to approximately 0.5 percent of the length of the wire 300 and approximately 0.4 percent of the length of the wire 300.
Clause 60 - The method of Clause 37, the picking 1408 of the wire 300 comprising: moving 2502 a first insertion robotic manipulator 606 on a first robotic transfer unit 608 toward the first shuttle 210, the first insertion robotic manipulator 606 mounted on the first robotic transfer unit 608, the first robotic transfer unit 608 disposed on the upper surface 212 of the tool support structure 214; picking 2504 the first terminated end 306 of the wire 300 from the first shuttle 210 using the first insertion robotic manipulator 606; moving 2506 a second insertion robotic manipulator 610 on a second robotic transfer unit 612 toward the second shuttle 216, the second insertion robotic manipulator 610 mounted on the second robotic transfer unit 612, the second robotic transfer unit 612 disposed on the upper surface 212 of the tool support structure 214 adjacent to the first robotic transfer unit 608; picking 2508 the second terminated end 308 of the wire 300 from the second shuttle 216 using the second insertion robotic manipulator 610; and picking 2510 the wire 300 between the first terminated end 306 and the second terminated end 308 using at least one transfer robotic manipulator 602 mounted on the upper surface 212 of the tool support structure 214 adjacent to the first robotic transfer unit 608 or the second robotic transfer unit 612.
Clause 61 - The method of Clause 60 wherein multiple transfer robotic manipulators 602 between the first terminated end 306 of the wire 300 and the second terminated end 308 of the wire 300 are spaced along the upper surface 212 of the tool support structure 214 by a predetermined distance.
Clause 62 - The method of Clause 61 wherein the predetermined distance comprises at least one of approximately 30,48 cm to approximately 91,44 cm, approximately 45,72 cm to approximately 76,20 cm and approximately 60,96 cm.
Clause 63 - The method of Clause 37, the placing 1410 of the wire 300 comprising: placing 2602 the wire 300 between the first terminated end 306 and the second terminated end 308 in wire routing supports 514 of a predetermined longitudinal routing lane 516 in the raceway assembly fixture 202 using at least one transfer robotic manipulator 602 mounted on the upper surface 212 of the tool support structure 214 adjacent to a first robotic transfer unit 608 associated with a first insertion robotic manipulator 606 or a second robotic transfer unit 612 associated with a second insertion robotic manipulator 610, the first insertion robotic manipulator 606 mounted on the first robotic transfer unit 608, the first robotic transfer unit 608 disposed on the upper surface 212 of the tool support structure 214, the second insertion robotic manipulator 610 mounted on the second robotic transfer unit 612, the second robotic transfer unit 612 disposed on the upper surface 212 of the tool support structure 214; placing 2604 the first terminated end 306 of the wire 300 in a predetermined origination electrical connector 512 in the raceway assembly fixture 202 using the first insertion robotic manipulator 606; and placing 2606 the second terminated end 308 of the wire 300 in a predetermined destination electrical connector 512 in the raceway assembly fixture 202 using the second insertion robotic manipulator 610.
Clause 64 - The method of Clause 63 wherein multiple transfer robotic manipulators 602 between the first terminated end 306 of the wire 300 and the second terminated end 308 of the wire 300 are spaced along the upper surface 212 of the tool support structure 214 by a predetermined distance.
Clause 65 - The method of Clause 64 wherein the predetermined distance comprises at least one of approximately 30,48 cm to approximately 91,44 cm, approximately 45,72 cm to approximately 76,20 cm and approximately 60,96 cm.
Clause 66 - The method of Clause 37, the picking 1408 of the wire 300 and the placing 1410 of the wire 300 comprising: picking 2702 the wire 300 between the first terminated end 306 and the second terminated end 308 using a robotic manipulator 218 disposed on the upper surface 212 of the tool support structure 214; and placing 2704 the wire 300 between the first terminated end 306 and the second terminated end 308 in wire routing supports 514 of a predetermined longitudinal routing lane 516 in the raceway assembly fixture 202 using the robotic manipulator 218.
Clause 67 - The method of Clause 66, the picking 1408 of the wire 300 and the placing 1410 of the wire 300 further comprising: moving 2802 the robotic manipulator 218 on a robotic transfer unit 608, 612 toward the first shuttle 210, the robotic manipulator 218 mounted on the robotic transfer unit 608, 612, the robotic transfer unit 608, 612 disposed on the upper surface 212 of the tool support structure 214; picking 2804 the first terminated end 306 of the wire 300 from the first shuttle 210 using the robotic manipulator 218; and placing 2806 the first terminated end 306 of the wire 300 in a predetermined origination electrical connector 512 in the raceway assembly fixture 202 using the robotic manipulator 218.
Clause 68 - The method of Clause 67, the picking 1408 of the wire 300 and the placing 1410 of the wire 300 further comprising: moving 2902 the robotic manipulator 218 on the robotic transfer unit 608, 612 toward the second shuttle 216; picking 2904 the second terminated end 308 of the wire 300 from the second shuttle 216 using the robotic manipulator 218; and placing 2906 the second terminated end 308 of the wire 300 in a predetermined destination electrical connector 512 in the raceway assembly fixture 202 using the robotic manipulator 218.
Clause 69 - A method 3000 for assembling an electrical raceway module, the method comprising: receiving 3002 a raceway assembly fixture 202 from a raceway preparation area 106 on a workpiece support structure 206, the workpiece support structure 206 alongside a tool support structure 214; receiving 3004 a wire 300 for placement in the raceway assembly fixture 202 from a wire preparation system 102, the wire 300 comprising a first terminated end 306 and a second terminated end 308; positioning 3006 the wire 300 on an upper surface 212 of the tool support structure 214 between a first shuttle 210 holding the first terminated end 306 and a second shuttle 216 holding the second terminated end 308; picking 3008 the wire 300 with the first terminated end 306 and the second terminated end 308 from the upper surface 212 of the tool support structure 214, the first shuttle 210 and the second shuttle 216; placing 3010 the wire 300 at a predetermined location in the raceway assembly fixture 202; repeating 3012 the receiving 3002, 3004, the positioning 3006, the picking 3008 and the placing 3010 of the wire 300 for a next wire 300 until all wires designated for autonomous placement in the raceway assembly fixture 202 are placed; and transferring 3014 the raceway assembly fixture 202 to a post wire assembly area 108 for manual assembly processes on the raceway assembly fixture 202 to prepare the electrical raceway module for installation in an end item.
Clause 70 - The method of Clause 69, the receiving 3002 of the raceway assembly fixture 202 comprising: receiving 3102 the raceway assembly fixture 202 from the raceway preparation area 106 via a raceway transport system; transferring 3104 the raceway assembly fixture 202 from the raceway transport system to a top surface 204 of the workpiece support structure 206; moving 3106 the workpiece support structure 206 with the raceway assembly fixture 202 alongside the tool support structure 214; and locking 3108 the workpiece support structure 206 in place.
Clause 71 - The method of Clause 69, the receiving 3004 of the wire 300 comprising: picking 3202 a coil 302 of the wire 300 with the first terminated end 306 and the second terminated end 308 from a wire carrier 400 on a wire transport system 104 using a tending robotic manipulator 614 mounted on a support platform 616 adjacent to a proximal end area 618 of the tool support structure 214; and placing 3204 the coil 302, the first terminated end 306 and the second terminated end 308 on an uncoiler assembly 712 disposed on the upper surface 212 at a proximal end area 618 of the tool support structure 214 using the tending robotic manipulator 614.
Clause 72 - The method of Clause 69 wherein a coil 302 of the wire 300 with the first terminated end 306 and the second terminated end 308 is positioned at an uncoiler assembly 712 on the upper surface 212 at a proximal end area 618 of the tool support structure 214, the positioning 3006 of the wire 300 comprising: capturing 3302 an identification number from a wire carrier identification element 408 on a wire carrier 400 of a wire transport system 104, the identification number uniquely identifying the wire carrier 400 in relation to other wire carriers on the wire transport system 104, the identification number correlating to a unique wire number associated with the wire 300 in relation to other wires of the electrical raceway module; determining 3304 locations in the raceway assembly fixture 202 for placement of the wire 300, the first terminated end 306 of the wire 300 and the second terminated end 308 of the wire 300 based at least in part on the identification number; moving 3306 the first shuttle 210 along a first longitudinal track 706 to a first pickup location proximate the uncoiler assembly 712; placing 3308 the first terminated end 306 of the wire 300 in the first shuttle 210 using a tending robotic manipulator 614 mounted on a support platform 616 adjacent to the proximal end area 618 of the tool support structure 214; moving 3310 the first shuttle 210 with the first terminated end 306 away from the uncoiler assembly 712 and rotating a rotatable plate 718 of the uncoiler assembly 712 until the coil 302 of the wire 300 is unwound; moving 3312 the second shuttle 216 along a second longitudinal track 710 to a second pickup location proximate the uncoiler assembly 712; placing 3314 the second terminated end 308 of the wire 300 in the second shuttle 216 from a second end holder 722 on the uncoiler assembly 712 using a tending robotic manipulator 614; and moving 3316 the first shuttle 210 with the first terminated end 306 and the second shuttle 216 with the second terminated end 308 away from the uncoiler assembly 712 until the wire 300 is positioned alongside a target location for the wire 300 in the raceway assembly fixture 202.
Clause 73 - The method of Clause 69, the picking 3008 of the wire 300 comprising: moving 3402 a first insertion robotic manipulator 606 on a first robotic transfer unit 608 toward the first shuttle 210, the first insertion robotic manipulator 606 mounted on the first robotic transfer unit 608, the first robotic transfer unit 608 disposed on the upper surface 212 of the tool support structure 214; picking 3404 the first terminated end 306 of the wire 300 from the first shuttle 210 using the first insertion robotic manipulator 606; moving 3406 a second insertion robotic manipulator 610 on a second robotic transfer unit 612 toward the second shuttle 216, the second insertion robotic manipulator 610 mounted on the second robotic transfer unit 612, the second robotic transfer unit 612 disposed on the upper surface 212 of the tool support structure 214 adjacent to the first robotic transfer unit 608; picking 3408 the second terminated end 308 of the wire 300 from the second shuttle 216 using the second insertion robotic manipulator 610; and picking 3410 the wire 300 between the first terminated end 306 and the second terminated end 308 using at least one transfer robotic manipulator 602 mounted on the upper surface 212 of the tool support structure 214 adjacent to the first robotic transfer unit 608 or the second robotic transfer unit 612.
Clause 74 - The method of Clause 69, the placing 3010 of the wire 300 comprising: placing 3502 the wire 300 between the first terminated end 306 and the second terminated end 308 in wire routing supports 514 of a predetermined longitudinal routing lane 516 in the raceway assembly fixture 202 using at least one transfer robotic manipulator 602 mounted on the upper surface 212 of the tool support structure 214 adjacent to a first robotic transfer unit 608 associated with a first insertion robotic manipulator 606 or a second robotic transfer unit 612 associated with a second insertion robotic manipulator 610, the first insertion robotic manipulator 606 mounted on the first robotic transfer unit 608, the first robotic transfer unit 608 disposed on the upper surface 212 of the tool support structure 214, the second insertion robotic manipulator 610 mounted on the second robotic transfer unit 612, the second robotic transfer unit 612 disposed on the upper surface 212 of the tool support structure 214; placing 3504 the first terminated end 306 of the wire 300 in a predetermined origination electrical connector 512 in the raceway assembly fixture 202 using the first insertion robotic manipulator 606; and placing 3506 the second terminated end 308 of the wire 300 in a predetermined destination electrical connector 512 in the raceway assembly fixture 202 using the second insertion robotic manipulator 610.
Clause 75 - The method of Clause 69, the picking 3008 of the wire 300 and the placing 3010 of the wire 300 comprising: picking 3602 the wire 300 between the first terminated end 306 and the second terminated end 308 using a robotic manipulator 218 disposed on the upper surface 212 of the tool support structure 214; placing 3604 the wire 300 between the first terminated end 306 and the second terminated end 308 in wire routing supports 514 of a predetermined longitudinal routing lane 516 in the raceway assembly fixture 202 using the robotic manipulator 218; moving 3606 the robotic manipulator 218 on a robotic transfer unit 608, 612 toward the first shuttle 210, the robotic manipulator 218 mounted on the robotic transfer unit 608, 612, the robotic transfer unit 608, 612 disposed on the upper surface 212 of the tool support structure 214; picking 3608 the first terminated end 306 of the wire 300 from the first shuttle 210 using the robotic manipulator 218; placing 3610 the first terminated end 306 of the wire 300 in a predetermined origination electrical connector 512 in the raceway assembly fixture 202 using the robotic manipulator 218; moving 3612 the robotic manipulator 218 on the robotic transfer unit 608, 612 toward the second shuttle 216; picking 3614 the second terminated end 308 of the wire 300 from the second shuttle 216 using the robotic manipulator 218; and placing 3616 the second terminated end 308 of the wire 300 in a predetermined destination electrical connector 512 in the raceway assembly fixture 202 using the robotic manipulator 218.

## Claims

1. A wire assembly system (100) for assembling an electrical raceway module, comprising:
a raceway assembly fixture (202) disposed on a top surface (204) of a workpiece support structure (206);
a wire shuttle subsystem (208) comprising a first shuttle (210) disposed on an upper surface (212) of a tool support structure (214) and a second shuttle (216) disposed on the upper surface (212);
at least one robotic manipulator (218) disposed on the upper surface (212) of the tool support structure (214); and
a system controller (220) in operative communication with the wire shuttle subsystem (208) and the at least one robotic manipulator (218) to control placement of a wire (300) from the first shuttle (210) and the second shuttle (216) to the raceway assembly fixture (202).

2. The wire assembly system of Claim 1 wherein the electrical raceway module is at least one of approximately 60,96 cm long to approximately 30,48 m long, approximately 3,05 m long to approximately 24,38 m long, approximately 6,10 m feet long to approximately 18,29 m long, approximately 9,14 m long to approximately 15,24 m long and approximately 12,19 m long.

3. The wire assembly system of Claims 1 or 2, wherein the workpiece support structure (206) comprises a conveyor table.

4. The wire assembly system of any one of Claims 1 to 3 wherein the at least one robotic manipulator (218) comprises one or more of at least one robotic arm, at least one 4-axis robotic arm, at least one 6-axis robotic arm, at least one 7-axis robotic arm, at least one selective compliance articulated robotic arm, at least one collaborative robot at least one electro-mechanical manipulator, at least one automated mechanical manipulator, at least one semi-automated mechanical manipulator, at least one fixed-actuator tending robot and at least one semi-manual use robot.

5. The wire assembly system of any one of Claims 1 to 4 wherein the wire assembly system (100) is configured to receive the wire (300) on a wire carrier (400) from a wire preparation system (102) via a wire transport system (104).

6. The wire assembly system of Claim 5 further including the wire carrier (400), wherein said wire carrier (400) comprises at least one coil holder (402), a first end clamp (404), a second end clamp (406) and a wire carrier identification element (408).

7. The wire assembly system of Claims 5 or 6 further including the wire (300), wherein the wire (300) comprises a coil (302) with a breakout point (304) at which a first terminated end (306) of the wire (300) and a second terminated end (308) of the wire (300) break out from the coil (302), the wire (300) further comprising a first wire marker (310) proximate the first terminated end (306) and a second wire marker (312) proximate the second terminated end (308), and preferably wherein the wire (300) comprises at least one of a single conductor, a twisted pair of conductors, a multiconductor cable, a shielded cable, an unjacketed cable, a coaxial cable, a matched-impedance cable and a fiber optic cable.

8. The wire assembly system of any one of the preceding Claims, wherein the raceway assembly fixture (202) comprises:
a raceway framework (502) comprising longitudinal side plates (504), lateral end plates (506), longitudinal support members (508) between the lateral end plates (506) and lateral support members (510) between the longitudinal side plates (504);
electrical connectors (512) disposed proximate the lateral end plates (506); and
wire routing supports (514) mounted on the lateral support members (510) to define longitudinal routing lanes (516), and preferably wherein the raceway assembly fixture (202) further comprises:
at least one additional electrical connector (518) disposed proximate at least one of the longitudinal side plates (504);
at least one printed wiring board (520) mounted on at least one of one or more of the longitudinal side plates (504), one or more of the lateral end plates (506), one or more of the longitudinal support members (508) and one or more of the lateral support members (510); and
breakout wiring supports (522) mounted on the lateral support members (510) to define lateral routing lanes (524) breaking out from one or more of the longitudinal routing lanes (516).

9. The wire assembly system of any one of the preceding Claims wherein the first shuttle (210) is configured to receive and temporarily retain a first terminated end (306) of a wire (300) and the second shuttle (216) is configured to receive and temporarily retain a second terminated end (308) of the wire (300), and
wherein the system controller (220) and the wire shuttle subsystem (208) are configured to position the first shuttle (210) and the second shuttle (216) to extend the wire (300) longitudinally on the upper surface (212) of the tool support structure (214).

10. The wire assembly system of Claim 9, wherein the at least one robotic manipulator (218) comprises:
at least one transfer robotic manipulator (602) mounted on the upper surface (212) of the tool support structure (214), the at least one transfer robotic manipulator (602) configured to pick the wire (300) from between the first shuttle (210) and the second shuttle (216) and place the wire (300) in one or more wire routing support (514) at predetermined locations in the raceway assembly fixture (202), and preferably wherein the at least one transfer robotic manipulator (602) comprises one or more of at least one robotic arm, at least one selective compliance articulated robotic arm and at least one collaborative robot.

11. The wire assembly system of Claim 10 wherein the at least one transfer robotic manipulator (602) comprises a plurality of transfer robotic manipulators (602) longitudinally spaced apart along the upper surface (212) of the tool support structure (214).

12. The wire assembly system of Claim 9, wherein alternatively:
the at least one robotic manipulator (218) comprises at least one insertion robotic manipulator (604) disposed on the upper surface (212) of the tool support structure (214), the at least one insertion robotic manipulator (604) configured to pick the first terminated end (306) of the wire (300) from the first shuttle (210) and to insert the first terminated end (306) in a predetermined origination electrical connector (512) at a first predetermined location in the raceway assembly fixture (202);
or
the at least one robotic manipulator (218) comprises:
a first insertion robotic manipulator (606) mounted on a first robotic transfer unit (608) disposed on the upper surface (212) of the tool support structure (214) and configured to translate the first insertion robotic manipulator (606) a length of the raceway assembly fixture (202), the first insertion robotic manipulator (606), in conjunction with the first robotic transfer unit (608), configured to pick the first terminated end (306) of the wire (300) from the first shuttle (210) and to insert the first terminated end (306) in a predetermined origination electrical connector (512) at a first predetermined location in the raceway assembly fixture (202); and
a second insertion robotic manipulator (610) mounted on a second robotic transfer unit (612) disposed on the upper surface (212) adjacent to the first robotic transfer unit (608) and configured to translate the second insertion robotic manipulator (610) the length of the raceway assembly fixture (202), the second insertion robotic manipulator (610), in conjunction with the second robotic transfer unit (612), being configured to pick the second terminated end (308) of the wire (300) from the second shuttle (216) and to insert the second terminated end (308) in a predetermined destination electrical connector (512) at a second predetermined location in the raceway assembly fixture (202).

13. The wire assembly system of any one of the preceding Claims, wherein the wire shuttle subsystem (208) further comprises:
a longitudinal trough (702) disposed on the upper surface (212) of the tool support structure (214) and extending alongside the raceway assembly fixture (202);
a first transport assembly (704) mechanically connected to the first shuttle (210) to position the first shuttle (210) along a first longitudinal track (706) of the longitudinal trough (702);
a second transport assembly (708) mechanically connected to the second shuttle (216) to position the second shuttle (216) along a second longitudinal track (710) of the longitudinal trough (702);
an uncoiler assembly (712) disposed on the upper surface (212) of the tool support structure (214) and configured to hold a coil (302) of the wire (300), a first terminated end (306) of the wire (300) and a second terminated end (308) of the wire (300);
an image sensor (714) proximate the uncoiler assembly (712) and configured to selectively capture images of the first terminated end (306) and the second terminated end (308) and images showing a status of the coil (302) on the uncoiler assembly (712);
a wire carrier identification detector (715) proximate a wire carrier (400) on a wire transport system (104), the wire carrier (400) configured to transport the wire (300) from a wire preparation system (102) to the wire assembly system (100), the wire carrier identification detector (715) configured to selectively capture an identification number from a wire carrier identification element (408) on the wire carrier (400); and
a control assembly (716) in operative communication with the first transport assembly (704), the second transport assembly (708), the uncoiler assembly (712), the image sensor (714), the wire carrier identification detector (715) and the system controller (220) to control transfer of the first terminated end (306) from the uncoiler assembly (712) to the first shuttle (210), movement of the first shuttle (210) along the first longitudinal track (706), unwinding of the coil (302) from the uncoiler assembly (712), placement of the second terminated end (308) from the uncoiler assembly (712) to the second shuttle (216) and movement of the second shuttle (216) along the second longitudinal track (710), and preferably wherein the uncoiler assembly (712) comprises:
a rotatable plate (718) configured to temporarily hold the coil (302) of the wire (300) and to unwind the wire (300) in response to tension on the first terminated end (306) in conjunction with movement of the first shuttle (210) along the first longitudinal track (706) of the wire shuttle subsystem (208);
a first end holder (720) disposed proximate the rotatable plate (718) and configured to temporarily hold the first terminated end (306) of the wire (300); and
a second end holder (722) mounted on the rotatable plate (718) and configured to hold the second terminated end (308) of the wire (300).

14. A method (1400) for assembling an electrical raceway module, the method comprising:
receiving (1402) a raceway assembly fixture (202) from a raceway preparation area (106) on a workpiece support structure (206), the workpiece support structure (206) alongside a tool support structure (214);
receiving (1404) a wire (300) for placement in the raceway assembly fixture (202) from a wire preparation system (102), the wire (300) comprising a first terminated end (306) and a second terminated end (308);
positioning (1406) the wire (300) on an upper surface (212) of the tool support structure (214) between a first shuttle (210) holding the first terminated end (306) and a second shuttle (216) holding the second terminated end (308);
picking (1408) the wire (300) with the first terminated end (306) and the second terminated end (308) from the upper surface (212) of the tool support structure (214), the first shuttle (210) and the second shuttle (216); and
placing (1410) the wire (300) at a predetermined location in the raceway assembly fixture (202).

15. The method of Claim 14 further comprising:
repeating (3012) the receiving (3002, 3004), the positioning (3006), the picking (3008) and the placing (3010) of the wire (300) for a next wire (300) until all wires designated for autonomous placement in the raceway assembly fixture (202) are placed; and
transferring (3014) the raceway assembly fixture (202) to a post wire assembly area (108) for manual assembly processes on the raceway assembly fixture (202) to prepare the electrical raceway module for installation in an end item.
